(19) Europäisches Patentamt
European Patent Office
Office européen des brevets

(11) **EP 4 095 774 A1**

(12) **EUROPEAN PATENT APPLICATION**
published in accordance with Art. 153(4) EPC

(43) Date of publication:
**30.11.2022 Bulletin 2022/48**

(51) International Patent Classification (IPC):
***G06Q 10/06*** (2012.01)

(21) Application number: **20915922.7**

(22) Date of filing: **05.03.2020**

(52) Cooperative Patent Classification (CPC):
**G06F 16/28; G06N 5/02; G06Q 10/06; G06Q 50/04;**
Y02P 80/10; Y02P 90/30

(86) International application number:
**PCT/CN2020/078005**

(87) International publication number:
**WO 2021/147143 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.01.2020 CN 202010072420**

(71) Applicant: **Xiamen Etom Intell-Tech Group Co., Ltd
Xiamen, Fujian 361000 (CN)**

(72) Inventors:
• **LIU, Yu**
  **Xiamen, Fujian 361000 (CN)**
• **SUN, Zailian**
  **Xiamen, Fujian 361000 (CN)**
• **MEI, Yu**
  **Xiamen, Fujian 361000 (CN)**

(74) Representative: **Loo, Chi Ching et al**
  **Albright IP Limited**
  **County House**
  **Bayshill Road**
  **Cheltenham, Gloucestershire GL50 3BA (GB)**

(54) **OPERATION BEHAVIOR RECORD MANAGEMENT METHOD, SYSTEM, AND DEVICE**

(57) Provided are an operation behavior record management method, system, and device. For specific implementation scenarios in industrial and service fields, three types of data theories and specific solutions are refined, so as to achieve real-time online accumulation, induction and reuse of operation experience of experts and labor skills of workers, achieve interaction and transfer of skills and experience between human and systems, machines and systems, systems and human, systems and machines, and machines and machines, achieve energy conservation and consumption reduction, quality control, efficiency improvement, secure operation, resource optimization, and other purposes, and solve the problem that highly-skilled workers in enterprises are difficult to train and have a high turnover and unbalanced skills.

**Description**

BACKGROUND OF THE INVENTION

1. Technical Field

The present invention relates to an operation behavior record management method, system and device.

2. Description of Related Art

In the industrial field and service field, with the development of data collection technology and Internet of Things technology, data utilization has been paid more and more attention, and a number of expert-experience-based, big-data-analysis-based, and artificial-intelligence-based data application systems have emerged. The expert-experience-based system which started early belongs to the informatization stage, and has limited future development space. The big-data-analysis-based system represented by data mining and the artificial-intelligence-based system represented by deep learning have developed rapidly and have their own characteristics. The existing problems of great differentiation and high safety requirements have become a common problem for high and new technologies in the in-depth development of the industrial field.

BRIEF SUMMARY OF THE INVENTION

The present invention provides an operation behavior record management method, system and device. The present invention works out a "three types of data" theory and specific solutions for specific application scenarios in the industrial field and service field, and achieves real-time online accumulation, induction and reuse of experts' operating experience and workers' labor skills, and also achieves human-system, machine-system, system-human, system-machine, and machine-machine interaction and transfer of skills and experience, thereby reaching the objectives of energy saving, consumption reduction, quality control, efficiency improvement, safe operation, and resource optimization, and the like, and also solving the enterprise's problems of difficulty in cultivating high-skilled workers, high loss of high-skilled workers, and unbalance in workers' skills.

The three types of data include basic work condition data, operational data, and evaluation data.

The basic work condition data represent a class of factors that actually exist in the production process, such as external input, external environment, production plans, cannot be changed or are not suitable to be changed, and have an impact on the production process and results.

The operational data represents human intervention in the production process, such as machine configuration, worker's manipulation for devices and the like.

The evaluation data represents optimization objectives, such as energy saving, consumption reduction, quality control, efficiency improvement, safe operation, and resource optimization. The optimization objectives here include objective values and optimization directions, such as: lower (direction) energy consumption (objective value); higher (direction) pass rate (objective value); higher (direction) yield of molten steel (objective value); lower (direction) ammonia escape rate (objective value); and shorter (direction) turnaround time (objective value).

An operation behavior record management method comprises:

> determining basic work condition data, operational data, evaluation data and constraints thereamong, wherein the basic work condition data, the operational data and the evaluation data all have at least one dimension;
> setting a subdivision rule for each dimension of the basic work condition data, and classifying the basic work condition data into at least one subdivided work condition through the subdivision rule, each subdivided work condition corresponding to an operation behavior record set;
> formulating an operation behavior recording rule, and obtaining real-time and/or historical basic work condition data, operational data and evaluation data;
> entering an operation behavior recording process and checking the constraints; if all the constraints are met, adding the subdivided work conditions, the operational data and the evaluation data to the corresponding operation behavior record set as a complete operation behavior record; and
> obtaining the current basic work condition data, searching for the corresponding subdivided work condition and its operation behavior record set, and selecting operational data corresponding to optimal evaluation data from operation behavior records that meet the constraints to form operation suggestions.

Further, after the operation suggestions are adopted by workers or the control system and equipment are reversely controlled by the operation suggestions, the operational data and evaluation data in real-time production change, and a new round of operation behavior recording process is entered, thereby ensuring the iterative update of the knowledge base.

Further, the constraints include preconditions for the optimization objectives, negative lists for operational data, and compliance constraints for evaluation data.

The precondition for the optimization objectives refers to reaching the optimization objectives when the preconditions are met; for example, energy consumption is reduced on the precondition that the product quality reaches the standard.

The negative list for operational data refers to dangerous operation behaviors that should be prohibited for reasons of equipment safety and personnel safety.

The compliance constraints refer to situations, in the evaluation of various results caused by basic operating condition data and operational data, that violate national standards, affect product quality compliance, and have adverse effects on subsequent processes.

Further, the operation behavior record set only retains a group of operation behavior records corresponding to optimal evaluation data or top N operation behavior records, such as the top ten, which reduces the space occupied by the database and improves the speed of giving operation suggestions.

An operation behavior record management system, adopting the above-mentioned operation behavior record management method and comprising a basic work condition data collecting module, an operational data collecting module, an evaluation data collecting module, and a data analysis module, wherein

the basic work condition data collecting module is configured to collect information of basic work condition data and transmit the information to the data analysis module;
the operational data collecting module is configured to collect operational data and transmit the operational data to the data analysis module;
the evaluation data collecting module is configured to collect or calculate evaluation data, and transmit the evaluation data to the data analysis module;
the data analysis module is pre-stored with: constraints among basic operating condition data, operational data, and evaluation data; and an operation behavior recording rule;
the data analysis module is configured to check constraints among real-time and/or historical basic work condition data, operational data and evaluation data; If all the constraints are met, subdivided work conditions, operational data and evaluation data are added to a corresponding operation behavior record set as a complete operation behavior record; the data analysis module obtains the current basic work condition data, searches for a corresponding subdivided work condition and its operation behavior record set, and selects operational data corresponding to optimal evaluation data from operation behavior records that meet the constraints to form operation suggestions.

An operation behavior record management device, adopting the above-mentioned operation behavior record management method and comprising a basic work condition data collecting unit, an operational data collecting unit, an evaluation data acquisition device, and a data analysis unit, wherein

the basic work condition data collecting unit comprises a sensor for collecting the information of basic work condition data and transmitting the information to the data analysis module;
the operational data collecting unit comprises a sensor for collecting operational data and transmitting the operational data to the data analysis module;
the evaluation data collecting unit comprises a sensor for collecting or calculating evaluation data and transmitting the evaluation data to the data analysis module;
the data analysis unit comprises a computer, pre-stored with: constraints among basic operating condition data, operational data, and evaluation data; and an operation behavior record rule;
the data analysis unit is configured to check constraints among real-time and/or historical basic work condition data, operational data and evaluation data; and to add subdivided work conditions, operational data and evaluation data to a corresponding operation behavior record set as a complete operation behavior record if all the constraints are met; the data analysis unit obtains the current basic work condition data, searches for a corresponding subdivided work condition and its operation behavior record set, and selects operational data corresponding to optimal evaluation data from operation behavior records that meet the constraints to form operation suggestions.

It can be seen from the above description of the present invention that, compared with the prior art, an operation behavior record management method, system and device of the present invention have the following advantages.

1. The production, manipulation, operation, and maintenance problems in the production field and service field are boiled down to three types of data and the relationship between the basic work condition data, operational data,

and evaluation data, and the problem in difference between production, control, operation, operation and maintenance inks in the production field and service field is solved.

2. In the production, control, operation links in the industrial field or in the operation and maintenance links in the service field, online knowledge accumulation of three types of data is achieved. By combining historical optimization methods and technologies with real-time online learning methods and technologies, online knowledge accumulation of three types of data is achieved, and the problem of operating experience accumulation in the actual production process is solved.

DETAILED DESCRIPTION OF THE INVENTION

In order to make the technical problems to be solved, technical solutions and advantages of the present invention more clear and more understandable, the present invention will be further described in detail below in conjunction with the drawings and embodiments. It should be understood that specific embodiments described here are merely illustrative of the present invention rather than limiting it.

Example 1

An operation behavior record management method comprises the following steps:
In step S10, basic work condition data, operational data, evaluation data and constraints between two of the three types of data or among the three types of data are determined, wherein the basic work condition data, the operational data and the evaluation data all have at least one dimension, and in different application scenarios, the dimensions are different.

Specifically, the constraints include preconditions for the optimization objectives, negative lists for operational data, and compliance constraints for evaluation data.

The precondition for the optimization objectives refers to reaching the optimization objectives when the preconditions are met; for example, energy consumption is reduced on the precondition that the product quality reaches the standard.

The negative lists for the operational data refer to dangerous operation behaviors that should be prohibited for reasons of equipment safety and personnel safety. The compliance constraints refer to situations, in the evaluation of various results caused by basic operating condition data and operational data, that violate national standards, affect product quality compliance, and have adverse effects on subsequent processes.

In step S20, a subdivision rule for each dimension of the basic work condition data is set, and the basic work condition data is classified into at least one subdivided work condition through the subdivision rule. Each subdivided work condition corresponds to an operation behavior record set. When the classification is finer, there are more subdivided work conditions, the knowledge base is more detailed, and the practicability and applicability are better.

In step S30, an operation behavior recording rule is formulated, and real-time and/or historical basic work condition data, operational data, and evaluation data are obtained. That is, the data can be derived from historical operations or real-time operations. If there is historical data, the improvement of the database can be accelerated. If there is no historical data, the database can continue to improve itself in practice.

In step S40, an operation behavior recording process is entered and the constraints are checked. If all the constraints are met, the subdivided work conditions, the operational data and the evaluation data are added to the corresponding operation behavior record set as a complete operation behavior record.

In step S50, the current basic work condition data is obtained, the corresponding subdivided work condition and its operation behavior record set are searched, and operational data corresponding to optimal evaluation data is selected from operation behavior records that meet the constraints to form operation suggestions.

In step S60, after the operation suggestions are adopted by workers or the control system and device are reversely controlled by the operation suggestions, the operational data and evaluation data in real-time production change, and a new round of operation behavior recording process S40 is entered, thereby ensuring the iterative update of the data base.

Example 2

An operation behavior record management system, adopting the above-mentioned operation behavior record management method and comprising a basic work condition data collecting module, an operational data collecting module, an evaluation data collecting module, and a data analysis module, wherein

the basic work condition data collecting module is configured to collect information of basic work condition data and transmit the information to the data analysis module;
the operational data collecting module is configured to collect operational data and transmit the operational data to the data analysis module;
the evaluation data collecting module is configured to collect or calculate evaluation data, and transmit the evaluation data to the data analysis module;
the data analysis module is pre-stored with: constraints among basic operating condition data, operational data, and evaluation data; and an operation behavior recording rule;
the data analysis module is configured to check constraints among real-time and/or historical basic work condition data, operational data and evaluation data; If all the constraints are met, subdivided work conditions, operational data and evaluation data are added to a corresponding operation behavior record set as a complete operation behavior record; the data analysis module obtains the current basic work condition data, searches for a corresponding subdivided work condition and its operation behavior record set, and selects operational data corresponding to optimal evaluation data from operation behavior records that meet the constraints to form operation suggestions.

Example 3

An operation behavior record management device, adopting the above-mentioned operation behavior record management method and comprising a basic work condition data collecting unit, an operational data collecting unit, an evaluation data acquisition device, and a data analysis unit, wherein

the basic work condition data collecting unit comprises a sensor for collecting the information of basic work condition data and transmitting the information to the data analysis module;
the operational data collecting unit comprises a sensor for collecting operational data and transmitting the operational data to the data analysis module;
the evaluation data collecting unit comprises a sensor for collecting or calculating evaluation data and transmitting the evaluation data to the data analysis module;
the data analysis unit comprises a computer, pre-stored with: constraints among basic operating condition data, operational data, and evaluation data; and an operation behavior record rule;
the data analysis unit is configured to check constraints among real-time and/or historical basic work condition data, operational data and evaluation data; and to add subdivided work conditions, operational data and evaluation data to a corresponding operation behavior record set as a complete operation behavior record if all the constraints are met; the data analysis unit obtains the current basic work condition data, searches for a corresponding subdivided work condition and its operation behavior record set, and selects operational data corresponding to optimal evaluation data from operation behavior records that meet the constraints to form operation suggestions.

Example 4

Control for coal gasifier

Coal gasification is a thermochemical processing process of coal. It is a process in which using coal or coal char as raw material, oxygen (air, oxygen-rich gas or industrial pure oxygen) and steam as gasification agents, combustible parts of coal or char are converted into combustible gas through chemical reactions under a high temperature and a high pressure. The generated combustible gas is mainly composed of carbon monoxide, hydrogen and methane. The combustible gas obtained during gasification becomes coal gas. The coal gas used as chemical raw material is generally called syngas, and the device for gasification is called gas generator or gasifier. Controllable parameters of the coal gasifier include oxygen addition, fuel layer thickness, air supply volume, air pressure, furnace temperature, furnace outlet pressure, and gasification agent dosage. The optimization objective herein is to achieve higher gasification efficiency.
The process flow of this embodiment:
In step S10, three data dimensions are determined.
Basic work conditions: coal type, the moisture content of coal, the clinkering property of coal, the reactivity of coal, the particle size of coal, the ash fusion point of coal, the volatile content of coal, the ash content of coal, and ambient temperature.
Operational data: oxygen addition, fuel layer thickness, air supply volume, air pressure, furnace temperature, furnace outlet pressure, and gasification agent dosage.
Optimization objective: to achieve higher gasification efficiency
Constraints: syngas quality meets a configuration value.
In step S20, a subdivision rule is set for each data dimension of the basic work conditions.
The isometric classification method is carried out in this example.
Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (coal type, the moisture content of coal, the clinkering property of coal, the reactivity of coal, the particle size of coal, the ash fusion point of coal, the volatile content of coal, the ash content of coal, and ambient temperature), operational data (oxygen addition, thickness of fuel layer, air supply volume, air pressure, furnace temperature, furnace outlet pressure, and gasification agent dosage), and evaluation data (gasification efficiency) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The oxygen addition, the fuel layer thickness, the air supply volume, the air pressure, the furnace temperature, the furnace outlet pressure, and the gasification agent dosage in the knowledge record are used as recommended data and support for coal gasifier operation settings.

In step S60, the recommended suggestions can be offered to workers for operation, or can be directly controlled by the DCS system of the device.

In S70, the process goes to step S30.

Example 5

Control for methanol converter

Syngas is prepared from coal-water slurry, where water-gas shift is carried out in the presence of a shift catalyst and then methanol is synthesized in the presence of a methanol synthesis catalyst in a methanol converter. Coal reacts with O2 in the air to produce crude gas with high CO content in a coal gasifier. The hydrogen-to-carbon ratio required for methanol synthesis is reached by converting CO into H2 through high-temperature shift. Since coal-to-methanol has less carbon and more hydrogen, hydrogen must be recovered from the exhaust gas of the synthesis cell to reduce coal consumption and energy consumption. Syngas required for production of methanol is prepared from recovered hydrogen and the purified syngas. The controllable parameters of the methanol converter include synthesis pressure, the hydrogen-to-carbon ratio of feed gas, space velocity, catalyst dosage, and reaction temperature. The optimization objective herein is to achieve a higher methanol yield.

The process flow of this embodiment:

In step S10, three data dimensions are determined.

Basic work conditions: catalyst properties, the components of feed gas, inlet temperature, the poison content of feed gas and catalyst, and hot spot temperature.

Operational data: synthesis pressure, the hydrogen-to-carbon ratio of feed gas, space velocity, catalyst dosage, and reaction temperature.

Optimization objective: to achieve a higher methanol yield.

Constraints: methanol composition meets a configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (catalyst properties, the components of feed gas, inlet temperature, the poison content of feed gas and catalyst, and hot spot temperature), operational data (synthesis pressure, the hydrogen-to-carbon ratio of feed gas, space velocity, catalyst dosage, and reaction temperature) and evaluation data (methanol yield) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The synthesis pressure, the hydrogen-to-carbon ratio of feed gas, space velocity, catalyst dosage, and reaction temperature in the knowledge record are used as recommended data and support for operation settings of the methanol converter.

In step S60, the recommended suggestions can be offered to workers for operation, or can be directly controlled by the DCS system of the device.

In S70, the process goes to step S30.

Example 6

Control for ammonia converter

The ammonia synthesis reaction is mainly to carry out the synthesis reaction of H2, S2O and N2 produced by the coal gasification in the previous stage in the converter. Under certain thermodynamic and kinetic conditions, the feed gas is mixed in proportion, and ammonia gas is synthesized and produced under high temperature and high pressure conditions. The generation process of synthetic ammonia can basically be divided into 3 steps: preparation of feed gas; purification of feed gas; synthesis of ammonia: steam is decomposed by the combustion of solid fuel (coke or coal), and O2 in the air reacts with coke or coal to produce a gas mixture of N2, H2, CO, CO2 and the like. After compressing the purified hydrogen and nitrogen mixture, ammonia is synthesized in the presence of an iron catalyst at a high temperature. The controllable parameters of the methanol converter include synthesis temperature, synthesis pressure, and air flow. The optimization objective herein is to achieve a higher ammonia yield.

The process flow of this embodiment:

In step S10, three data dimensions are determined.

Basic work conditions: the hydrogen-to-nitrogen ratio of feed gas, catalyst properties, the methane content of feed gas, inlet gas temperature, and catalyst life.

Operational data: synthesis temperature, synthesis pressure, and air flow.

Optimization objective: to achieve a higher ammonia yield.

Constraints: the quality of produced ammonia meets a configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the hydrogen-to-nitrogen ratio of feed gas, catalyst properties, the methane content of feed gas, inlet gas temperature, and catalyst life), operational data (synthesis temperature, synthesis pressure, and air flow) and evaluation data (ammonia yield) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The synthesis temperature, the synthesis pressure, and the air flow in the knowledge record are used as recommended data and support for operation settings of the ammonia converter.

In step S60, the recommended suggestions can be offered to workers for operation, or can be directly controlled by the DCS system of the device.

In S70, the process goes to step S30.

Example 7

Control for MTO (Methanol to Olefins) reactor

After being pulverized and pretreated, feed coal enters the coal gasifier for incomplete oxidation reaction with oxygen to obtain semi-water gas. After wet desulfurization by using a zinc oxide desulfurizer, carbon monoxide reacts with water to adjust the carbon-to-hydrogen ratio so that the shift gas has a certain carbon-to-hydrogen ratio, and then is fed to the methanol synthesis loop. Replacement gas is pressurized to a certain pressure by a gas-forming compressor and then enters the synthesis converter to reacts at a certain temperature in the presence of a copper-based catalyst, and the product undergoes double-column rectification to obtain methanol.

Ethylene or propylene is produced from methanol through MTO and MTP processes. Ethylene or propylene is further fed to a polyester section to obtain a polymer material such as polyethylene. The controllable parameters of the MTO reactor include reaction temperature, reaction pressure, reaction residence time, space velocity, and catalyst dosage. The optimization objective herein is to achieve a higher methanol conversion rate.

The process flow of this embodiment:

In step S10, three data dimensions are determined.

Basic work conditions: the carbon-to-hydrogen ratio of raw material and catalyst properties;

Operational data: reaction temperature, reaction pressure, reaction residence time, space velocity, and catalyst dosage.

Optimization objective: to achieve a higher methanol conversion rate.

Constraints: the quality parameters of produced olefins meet configuration values.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the carbon-to-hydrogen ratio of raw material and catalyst properties), operational data (reaction temperature, reaction pressure, reaction residence time, space velocity, and catalyst dosage) and evaluation data (methanol conversion ratio) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The reaction temperature, the reaction pressure, the reaction residence time, the space velocity, and the catalyst dosage in the knowledge record are used as recommended data and support for operation settings of the MTO reactor.

In step S60, the recommended suggestions can be offered to workers for operation, or can be directly controlled by the DCS system of the device.

In S70, the process goes to step S30.

Example 8

Control for acetic acid reactor

Coal reacts with O2 in the air to produce crude gas with high CO and H2 content in the gasifier. The crude gas exiting the gasifier is divided into 3 paths: part of CO is transformed into H2 through steam shift to achieve the hydrogen-to-carbon ratio in methanol synthesis; this path of crude gas is mixed with another path of crude gas (mixed gas), and after heat recovery, the crude gas enters the purification process to remove excess CO2 and sulfides, thus obtaining the feed gas for methanol synthesis; the synthesized crude methanol is refined to obtain the product methanol; CO is separated from the third path of crude gas after heat recovery and purification to obtain feed gas for synthesis of acetic acid; the refined methanol reacts with CO in the presence of a catalyst to synthesize acetic acid, and the synthesized acetic acid is refined to obtain the product acetic acid. The controllable parameters of the acetic acid reactor include reaction temperature, reaction pressure, reaction time, space velocity, and catalyst dosage. The optimization objective herein is to achieve a higher methanol conversion rate.

The process flow of this embodiment:

In step S10, three data dimensions are determined.

Basic work conditions: inlet feed temperature, catalyst properties, feed gas composition, and oxygen-to-alcohol ratio;

Operational data: reaction temperature, reaction pressure, reaction time, space velocity, and catalyst dosage.

Optimization objective: to achieve a higher methanol conversion rate.

Constraints: the quality parameters of acetic acid meet configuration values.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the inlet feed temperature, catalyst properties, feed gas composition, and the oxygen-to-alcohol ratio), operational data (reaction temperature, reaction pressure, reaction time, space velocity, and catalyst dosage), and evaluation data (methanol conversion ratio) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The reaction temperature, the reaction pressure, the reaction time, the space velocity, and the catalyst dosage in the knowledge record are used as recommended data and support for settings of the acetic acid reactor.

In step S60, the recommended suggestions can be offered to workers for operation, or can be directly controlled by the DCS system of the device.

In S70, the process goes to step S30.

Example 9

Control for oxidation to formaldehyde reactor

When the raw material mixture of methanol, air and steam enters the reactor (oxidizer) in a certain proportion, oxidation reaction and dehydrogenation reaction occur on a catalyst (silver/iron-molybdenum catalyst), so that methanol can be converted into formaldehyde under certain conditions. The controllable parameters of the formaldehyde reactor include reaction temperature, reaction pressure, reaction time, space velocity, and catalyst dosage. The optimization objective herein is to achieve a higher methanol conversion rate.

The process flow of this embodiment:

In step S10, three data dimensions are determined.

Basic work conditions: feed gas composition, catalyst properties, inlet feed temperature, and oxygen-to-alcohol ratio;

Operational data: reaction temperature, reaction pressure, reaction time, space velocity, and catalyst dosage.

Optimization objective: to achieve a higher methanol conversion rate.

Constraints: the quality parameters of formaldehyde meet configuration values.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the feed gas composition, catalyst properties, inlet feed temperature, and oxygen-to-alcohol ratio), operational data (reaction temperature, reaction pressure, reaction time, space velocity, and catalyst dosage), and evaluation data (methanol conversion ratio) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The reaction temperature, the reaction pressure, the reaction time, the space velocity, and the catalyst dosage in the knowledge record are used as recommended data and support for settings of the oxidation to formaldehyde reactor.

In step S60, the recommended suggestions can be offered to workers for operation, or can be directly controlled by the DCS system of the device.

In S70, the process goes to step S30.

Example 10

Control for direct coal liquefaction

Coal liquefaction is a technology that converts solid coal into liquid products (liquid hydrocarbon fuels, such as gasoline, diesel and other products or chemical raw materials) through chemical processing. Coal liquefaction is divided into direct liquefaction and indirect liquefaction. The two liquefaction methods have different requirements for coal quality.

Direct liquefaction of coal refers to a process in which coal is converted into liquid fuel by hydrocracking in the presence of hydrogen and a catalyst. Cracking is a reaction process that splits hydrocarbon molecules into a plurality of smaller molecules. Because the direct liquefaction process of coal mainly adopts hydrogenation method, it is also called the hydrogenation liquefaction method of coal. The controllable parameters of the direct coal liquefaction process include hydrogenation amount, reaction temperature, reaction pressure, catalyst dosage, gas/liquid ratio, and circulating hydrogen concentration. The optimization objective herein is to achieve higher liquefaction conversion efficiency.

The process flow of this embodiment:

In step S10, three data dimensions are determined.

Basic work conditions: coal type, the moisture content of coal, coal properties (the reactivity of coal, the volatile content of coal, the ash fusion point of coal, the clinkering property of coal, etc.), coal particle size, and catalyst properties.

Operational data: hydrogenation amount, reaction temperature, reaction pressure, catalyst dosage, gas/liquid ratio, and circulating hydrogen concentration.

Optimization objective: to achieve higher liquefaction conversion efficiency.

Constraints: the quality parameters of the liquefied product meet the configuration values.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the coal type, the moisture content of coal, coal properties, coal particle size, and catalyst properties), operational data (hydrogenation amount, reaction temperature, reaction pressure, catalyst dosage, gas/liquid ratio, and circulating hydrogen concentration) and evaluation data (liquefaction conversion efficiency) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The hydrogenation amount, the reaction temperature, the reaction pressure, the catalyst dosage, the gas/liquid ratio, and the circulating hydrogen concentration in the knowledge record are used as recommended data and support for settings of the direct coal liquefaction.

In step S60, the recommended suggestions can be offered to workers for operation, or can be directly controlled by the DCS system of the device.

The process goes to step S30.

Example 11

Control for coal blending in coking

Coal coking, also known as high temperature coal retorting, is a coal conversion process in which raw material coal is retorted at a high temperature under the condition of isolation of air to produce coke and obtain coal gas and coal tar and other chemical products are recovered at the same time. The controllable parameters of the coal blending process in coking include coal blending ratio and coal blending temperature. The optimization objective herein is to achieve a coal blending scheme with a lower unit cost.

The process flow of this embodiment:

In step S10, three data dimensions are determined.

Basic work conditions: coal type, coal properties (the reactivity, volatile content, ash content and other parameters of coal), coal particle size, the ambient temperature and humidity of workshop, and tamping density.

Operational data: coal blending ratio and coal blending temperature;

Optimization objective: to achieve a coal blending scheme with a lower unit cost.

Constraints: the quality parameters of coke meet configuration values.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (coal type, coal properties, coal particle size, the ambient temperature and humidity of workshop, and tamping density), operational data (coal blending ratio and coal blending temperature) and evaluation data (the unit cost of a coal blending scheme) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The coal blending ratio and the coal blending temperature in the knowledge record are used as recommended data and support for settings of coal blending in coking.

In step S60, the recommended suggestions can be offered to workers for operation, or can be directly controlled by the DCS system of the device.

In S70, the process goes to step S30.

Example 12

Control for wastewater treatment

The wastewater produced by coal chemical industry mainly includes coking wastewater, gasification wastewater and liquefaction wastewater. Coal chemical wastewater is treated according to the process of physical and chemical pretreatment - biochemical treatment - advanced treatment.

Physical and chemical pretreatment: oil removal - dephenolization (effective recovery of phenols) - deamination (recovery of ammonia) - flocculation sedimentation (removal of suspended solids) - multi-element micro-electrolysis filler (toxin reduction, decolorization, enhanced flocculation and improved biodegradability of wastewater).

Biochemical treatment: based on the metabolism of microorganisms, organic pollutants are converted into harmless substances such as carbon dioxide, water, and the like.

Advanced treatment is mainly used to remove suspended solids remaining in water. Decolorization and deodorization are carried out to clarify the effluent and further reduce BOD, COD, and the like. The water quality is further stabilized, and nitrogen and phosphorus are removed further. Factors that can lead to eutrophication of water bodies are eliminated. Toxic substances in water are removed by sterilization and disinfection. The controllable parameters in the wastewater treatment process include the dosage and addition time of each treatment agent and the parameter settings (water valve flow, fan speed, compressor speed, and the like) of the wastewater treatment device. The optimization objective herein is to achieve lower unit power consumption of wastewater treatment.

The process flow of this embodiment:

In step S10, three data dimensions are determined.

Basic work conditions: water volume, wastewater composition (COD, ammonia nitrogen content, inorganic pollutant content, oil and wax content, and the like), wastewater pH, and ambient temperature.

Operational data: the dosage and addition time of each treatment agent and the parameter settings (water valve flow, fan speed, compressor speed, and the like) of the wastewater treatment device.

Optimization objective: to achieve the lower unit power consumption of wastewater treatment.

Constraints: the indexes of the treated wastewater meet the configuration values.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (water volume, wastewater composition, wastewater pH, and ambient temperature), operational data (the dosage and addition time of each treatment agent and the parameter settings of the wastewater treatment device) and evaluation data (unit power consumption of wastewater treatment) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The dosage and addition time of each treatment agent and the parameter settings of the wastewater treatment device are used as recommended data and support for settings of wastewater treatment.

In step S60, the recommended suggestions can be offered to workers for operation, or can be directly controlled by the DCS system of the device.

In S70, the process goes to step S30.

Example 13

Lighting system in buildings.
The process flow of this embodiment:
In step S10, three data dimensions are determined.
Basic work conditions: light intensity inside the building
Operational data: the number of lighting fixtures used and switches of the lighting fixtures;
Optimization objective: to achieve the lower daily power consumption of building lighting devices.
Constraints: the lighting brightness of the control area meets the configuration value.
In step S20, a subdivision rule is set for each data dimension of the basic work conditions.
The isometric classification method is carried out in this example.
Upper and lower limits are set for work condition data.
In step S30, the basic work condition data and the operational data are monitored in a real-time and online manner, and an operation record collection plan, including collection time, is formulated once a change is found.
In step S40, operation record collection is carried out.
If there is currently an operation record collection plan and the collection time is up, the constraints are checked. If all the constraints are met, the basic work condition data (light intensity inside the building), operational data (the number of lighting fixtures used and switches of the lighting fixtures) and evaluation data (the lighting brightness of the control area meets the configuration value) are added to the knowledge base as a complete knowledge record.
In step S50, intelligent decision-making is performed.
The current basic work conditions are obtained and the knowledge base is searched for the corresponding subdivided work conditions. For knowledge records that meet the constraints, records corresponding to the optimal evaluation data are selected as the basis for generating operation suggestions. The number of lighting fixtures used and the switches of the lighting fixtures in the knowledge record are used as recommended data and support for settings.
In step S60, the recommended suggestions can be offered to workers for operation, or can be directly controlled by the system.
In S70, the process goes to step S30.

Example 14

Lighting control for traffic tunnels

The process flow of this embodiment:
In step S10, three data dimensions are determined.
Basic work conditions: light intensity outside the tunnels and traffic flow.
Operational data: circuit voltage and the working power of lighting fixtures.
Optimization objective: to achieve the lower daily power consumption of traffic tunnel lighting devices.
Constraints: the tunnel lighting brightness meets the configuration value, and the tunnel lighting uniformity meets the configuration value.
In step S20, a subdivision rule is set for each data dimension of the basic work conditions.
Upper and lower limits of the light intensity outside the tunnels are set.
Upper and lower limits of traffic flow are set.
In step S30, the basic work condition data and the operational data are monitored in a real-time and online manner, and an operation record collection plan, including collection time, is formulated once a change is found.
In step S40, operation record collection is carried out.
If there is currently an operation record collection plan and the collection time is up, the constraints are checked. If all the constraints are met, the basic work condition data (light intensity outside the tunnels and traffic flow), operational data (the circuit voltage and the working power of lighting fixtures) and evaluation data (the daily power consumption of traffic tunnel lighting devices) are added to the knowledge base as a complete knowledge record.
In step S50, intelligent decision-making is performed.
The current basic work conditions are obtained and the knowledge base is searched for the corresponding subdivided work conditions. For knowledge records that meet the constraints, records corresponding to the optimal evaluation data are selected as the basis for generating operation suggestions. The circuit voltage and the working power of lighting fixtures in the knowledge record are used as recommended data and support for settings.
In step S60, the recommended suggestions can be offered to workers for operation, or can be directly controlled by the air-conditioning system.

In S70, the process goes to step S30.

Example 15

Control for crude oil desalination and dehydration

The first step after the crude oil enters the plant is desalination and dehydration. Specifically, a small amount of water (about 5%) is added to and mixed thoroughly with the crude oil so that all the salts are dissolved in the water. A demulsifier is then added. Under certain conditions (heating and pressurization), the water droplets are enlarged and separated by sedimentation under the action of an electric field. Desalination and dehydration are carried out simultaneously. The controllable parameters of a crude oil desalination device include desalination temperature, operating pressure, and demulsifier dosage. The product is crude oil after desalination and dehydration. The optimization objective herein is to achieve lower unit power consumption of the desalination device.

The process flow of this embodiment:

In step S10, three data dimensions are determined.

Basic work conditions: the moisture content of crude oil, the salt content of crude oil, injected water quality, and demulsifier type.

Operational data: desalination temperature, operating pressure, and demulsifier dosage.

Optimization objective: to achieve the lower unit power consumption of the desalination device.

Constraints: the salt content of the crude oil after desalination meets the configuration value, and the moisture content of the crude oil after dehydration meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the moisture content of crude oil, the salt content of crude oil, injected water quality, and demulsifier type), operational data (desalination temperature, operating pressure, and demulsifier dosage) and evaluation data (the unit power consumption of the desalination device) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The desalination temperature, the operating pressure, and the demulsifier dosage in the knowledge record are used as recommended data and support for operation settings of crude oil desalination and dehydration.

In step S60, the recommended suggestions can be offered to workers for operation, or can be directly controlled by the DCS system of the device.

In S70, the process goes to step S30.

Example 16

Control for atmospheric distillation column of petroleum

The crude oil is heated to 360°C to 370°C by a heating furnace, and then enters an atmospheric distillation column (36 to 48 trays are provided). At a certain temperature, steam is injected into the column, the linear velocity of steam in the column, the operating pressure at the top of the column is about 0.05Mpa (gauge pressure), and the naphtha fraction is obtained at the top of the column. The controllable parameters of the atmospheric distillation column include distillation temperature, reflux ratio, the linear velocity of steam in the column, and the amount of steam injected. The optimization objective herein is to achieve higher fractionation accuracy.

The process flow of this embodiment:

In step S10, three data dimensions are determined.

Basic work conditions: the moisture content of crude oil, the salt content of crude oil, crude oil input, the inlet temperature of crude oil, pressure in the column, and liquid level at the bottom of the column;

Operational data: distillation temperature, reflux ratio, the linear velocity of steam in the column, and the amount of steam injected.

Optimization objective: to achieve higher fractionation accuracy.

Constraints: the pull-out rate meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the moisture content of crude oil, the salt content of crude oil, crude oil input, the inlet temperature of crude oil, pressure in the column, and liquid level at the bottom of the column), operational data (distillation temperature, reflux ratio, the linear velocity of steam in the column, and the amount of steam injected) and evaluation data (fractionation accuracy) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The distillation temperature, the reflux ratio, the linear velocity of steam in the column, and the amount of steam injected in the knowledge record are used as recommended data and support for operation settings of the atmospheric distillation column of petroleum.

In step S60, the recommended suggestions can be offered to workers for operation, or can be directly controlled by the DCS system of the device.

In S70, the process goes to step S30.

Example 17

Control for catalytic cracking furnace of petroleum

The feed oil enters the heating furnace through heat exchange by the heat exchanger, and there is also the return oil from the fractionation column. They enter the heating furnace at a certain flow rate, and after being heated under a certain pressure, the oil reaches a certain temperature and is then fed into a reactor of the catalytic cracking device. The controllable parameters of the heating furnace include the flow rate of feed oil, the flow rate of return oil, the flow rate of combustion-supporting air, the heating pressure, and the flow rate of fuel. The optimization objective herein is to achieve lower unit fuel consumption of the catalytic cracking furnace.

The process flow of this embodiment:
In step S10, three data dimensions are determined.

Basic work conditions: combustion-supporting air temperature, the inlet temperature of fuel, air exhaust temperature, gas exhaust temperature, the inlet temperature of feed oil, the inlet temperature of return oil, and outlet target temperature.

Operational data: the flow rate of feed oil, the flow rate of return oil, the flow rate of combustion-supporting air, the heating pressure, and the flow rate of fuel.

Optimization objective: to achieve the lower unit fuel consumption of the catalytic cracking furnace.

Constraints: the temperature of the feed oil meets the configuration value, and the uniformity of the feed oil meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the combustion-supporting air temperature, the inlet temperature of fuel, air exhaust temperature, gas exhaust temperature, the inlet temperature of feed oil, the inlet temperature of return oil, and outlet target temperature), operational data (the flow rate of feed oil, the flow rate of return oil, the flow rate of combustion-supporting air, the heating pressure, and the flow rate of fuel), and evaluation data (the unit fuel consumption of the catalytic cracking furnace) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The flow rate of feed oil, the flow rate of return oil, the flow rate of combustion-supporting air, the heating pressure, and the flow rate of fuel in the knowledge record are used as recommended data and support for operation settings of the catalytic cracking furnace of petroleum.

In step S60, the recommended suggestions can be offered to workers for operation, or can be directly controlled by the DCS system of the device.

In S70, the process goes to step S30.

Example 18

Control for catalytic cracking stabilizer of petroleum

In a feed heat exchanger, the hydrogenated gasoline coming out of the reactor exchanges heat with gasoline at the bottom of the stabilizer and finally enters the gasoline stabilizer. Liquid hydrocarbons, C1, C2, hydrogen sulfide, hydrogen and other light components dissolved in the oil are separated from the top of the stabilizer under a certain pressure. Part of the liquid phase obtained after condensation is refluxed to the top of the tower and part is fed to the device as a liquefied gas product. The controllable parameters of the stabilizer include top temperature, top pressure, reflux ratio, and heating steam feed. The optimization objective herein is to achieve smaller absolute value of the difference between the stable gasoline steam pressure and the set value.

The process flow of this embodiment:
In step S10, three data dimensions are determined.

Basic work conditions: feed temperature, feed position, circulating water volume.

Operational data: top temperature, top pressure, reflux ratio, and heating steam feed.

Optimization objective: to achieve a smaller absolute value of the difference between the stable gasoline steam pressure and the set value.

Constraints: The C5 content in the liquefied gas meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (feed temperature, feed position, circulating water volume), operational data (top temperature, top pressure, reflux ratio, and heating steam feed), and evaluation data (control over the absolute value of the difference between the stable gasoline steam pressure and the set value) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The top temperature, the top pressure, the reflux ratio, and the heating steam feed in the knowledge record are used as recommended data and support for operation settings of the catalytic cracking stabilizer of petroleum.

In step S60, the recommended suggestions can be offered to workers for operation, or can be directly controlled by the DCS system of the device.

In S70, the process goes to step S30.

Example 19

Control for aromatic extractor

Lean solvents enter the extractor from the top and come into reverse contact with the hydrocarbons fed from the middle. The aromatics in the feed are extracted step by step at a certain temperature to implement the extraction process of aromatics. The controllable parameters of the extractor include the flow rate of each solvent, backwash ratio, and the extraction temperature. The optimization objective is to achieve a higher yield of aromatics.

The process flow of this embodiment:
In step S10, three data dimensions are determined.

Basic work conditions: the feeding position of raw material, the inlet temperature of solvents, the feeding flow rate of raw material, and the non-aromatic content of raw material fed.

Operational data: the flow rate of each solvent, backwash ratio, and the extraction temperature.

Optimization objective: to achieve a higher yield of aromatics.

Constraints: the purity of aromatics meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the feeding position of raw material, the inlet temperature of solvents, the feeding flow rate of raw material, and the non-aromatic content of raw material fed), operational data (the flow rate of each solvent, backwash ratio, and the extraction temperature), and evaluation data (the yield of aromatics) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The flow rate of each solvent, the backwash ratio, and the extraction temperature in the knowledge record are used as recommended data and support for operation settings of the aromatic extractor.

In step S60, the recommended suggestions can be offered to workers for operation, or can be directly controlled by the DCS system of the device.

In S70, the process goes to step S30.

Example 20

Control for aromatic extraction stripper

The raw material enters the stripper from the top and leaves the stripper from the bottom. Solvents enter the stripper from the bottom, come into reverse contact with the liquid raw material in the stripper, and leave the stripper together with the stripped components from the top. The controllable parameters of the stripper include feed flow rate, steam flow, extraction amount of rich solvents, top pressure, and the flow rate of defoamer. The optimization objective herein is to obtain aromatics with higher purity.

The process flow of this embodiment:

In step S10, three data dimensions are determined.

Basic work conditions: the concentration of defoamer, the pressure drop of the stripper, feed temperature, and the liquid level at the bottom of the stripper.

Operational data: feed flow rate, steam flow, extraction amount of rich solvents, top pressure, and the flow rate of defoamer.

Optimization objective: to obtain aromatics with higher purity.

Constraints: The yield of aromatics is greater than the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the concentration of defoamer, the pressure drop of the stripper, feed temperature, and the liquid level at the bottom of the stripper), operational data (the feed flow rate, the steam flow, the extraction amount of rich solvents, the top pressure, and the flow rate of defoamer) and evaluation data (the purity of aromatics) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The feed flow rate, the steam flow, the extraction amount of rich solvents, the top pressure, and the flow rate of defoamer in the knowledge record are used as recommended data and support for operation settings of the aromatic extraction stripper.

In step S60, the recommended suggestions can be offered to workers for operation, or can be directly controlled by the DCS system of the device.

In S70, the process goes to step S30.

Example 21

Control for ethylene cracking furnace

After being preheated, the cracking raw material is mixed with superheated steam in a certain proportion (depending on the raw material) and heated to 500°C to 600°C in the convection section of a tube furnace, and then enters the radiation chamber where the raw material is heated to 780 to 900°C in the radiant furnace tube and cracked. The controllable parameters of the ethylene cracking furnace include the amount of steam fed, cracking temperature, and residence time. The optimization objective herein is to achieve a lower unit fuel gas consumption of the ethylene cracking furnace.

The process flow of this embodiment:

In step S10, three data dimensions are determined.

Basic work conditions: feed temperature, the properties of cracking raw material, and steam-to-hydrocarbon ratio.

Operational data: the amount of steam fed, cracking temperature, and residence time.

Optimization objective: to achieve the lower unit fuel gas consumption of the ethylene cracking furnace.

Constraints: the yield of ethylene is greater than the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the feed temperature, the properties of cracking raw material, and steam-to-hydrocarbon ratio), operational data (the amount of steam fed, cracking temperature, and residence time) and evaluation data (the unit fuel gas consumption of the ethylene cracking furnace) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The amount of steam fed, the cracking temperature, and the residence time in the knowledge record are used as recommended data and support for settings of the ethylene cracking furnace.

In step S60, the recommended suggestions can be offered to workers for operation, or can be directly controlled by the DCS system of the device.

In S70, the process goes to step S30.

Example 22

Control for ethylene oxidation reactor

Circulating gas and ethylene are introduced into a vertical reactor filled with a catalyst solution. Pure oxygen is also introduced into the bottom of the reactor at the same time, and the reaction is carried out under a micropressure. The controllable parameters of the oxidation reactor include reaction temperature and reaction pressure, and the optimization objective herein is to achieve higher single-pass selectivity of acetaldehyde.

The process flow of this embodiment:

In step S10, three data dimensions are determined.

Basic work conditions: the components of feed gas, catalyst composition, circulating gas volume, and catalyst solution concentration.

Operational data: reaction temperature and reaction pressure.

Optimization objective: to achieve the higher single-pass selectivity of acetaldehyde.

Constraints: the ethylene conversion is greater than the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the components of feed gas, catalyst composition, circulating gas volume, and catalyst solution concentration), operational data (reaction temperature and reaction pressure), and evaluation data (the single-pass selectivity of acetaldehyde) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The reaction temperature and the reaction pressure in the knowledge record are used as recommended data and support for settings of the ethylene oxidation reactor.

In step S60, the recommended suggestions can be offered to workers for operation, or can be directly controlled by the DCS system of the device.

In S70, the process goes to step S30.

Example 23

Control for COD treatment of wastewater

The COD (chemical oxygen demand) treatment can adopt the anaerobic-aerobic method. First, the wastewater passes through the anaerobic section, and the organic pollutants are degraded by facultative anaerobic bacteria and obligate anaerobic bacteria. The COD value is then reduced by the aerobic bacteria in the aerobic section, and nitrogen and phosphorus are further removed. The treatment process involves multiple electrical devices. The controllable parameters of the COD treatment process include water purifier dosage, treatment temperature, residence time, and current control for the device.

The process flow of this embodiment:

In step S10, three data dimensions are determined.

Basic work conditions: wastewater volume, the inlet temperature of wastewater, COD value, wastewater pH, the number of anaerobic bacteria per cubic centimeter, the number of aerobic bacteria per cubic centimeter, and the nitrogen and phosphorus content of wastewater.

Operational data: water purifier dosage, treatment temperature, residence time, and current control for the device.

Optimization objective: to achieve the lower unit power consumption of the wastewater treatment device.

Constraints: the COD value of the treated wastewater meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (wastewater volume, the inlet temperature of wastewater, COD value, wastewater pH, the number of anaerobic bacteria per cubic centimeter, the number of aerobic bacteria per cubic centimeter, and the nitrogen and phosphorus content of wastewater), operational data (the water purifier dosage, treatment temperature, residence time, and current control for the device) and evaluation data (the unit power consumption of the wastewater treatment device) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The water purifier dosage, the treatment temperature, the residence time, and the current control for the device in the knowledge record are used as recommended data and support for settings of COD treatment of wastewater.

In step S60, the recommended suggestions can be offered to workers for operation, or can be directly controlled by the DCS system of the device.

In S70, the process goes to step S30.

Example 24

Control for waste incineration device

The process flow of this embodiment:

In step S10, three data dimensions are determined.

Basic work conditions: waste storage pit temperature, humidity, negative pressure in the furnace, layer thickness, the water level of boiler, CO concentration in the incinerator, O2 concentration, temperature in the incinerator, superheated steam pressure, superheated steam temperature, the feed water temperature of boiler, the working pressure of boiler drum, hot air temperature, exhaust temperature, and the water level of boiler drum.

Operational data: the fermentation time of waste in storage pit, feeding time point, the residence time of feeder, feeder stroke, the residence time of waste in each grate, the movement speed of each grate, time point of primary air supply, air pressure, air temperature and air volume; the residence time of waste in the incinerator, and set temperature in the incinerator.

Optimization objective: to achieve a higher current steam flow of the boiler.

Constraints: CO concentration in flue gas is less than 60mg/m3.

In step S20, a subdivision rule is set for each data dimension of the basic work conditions.

The isometric classification method is carried out in this example.

The step value of the outside temperature is 1° C.

The step value of the outside humidity is 5%.

The step value of the negative pressure in the furnace is IMpa.

The step value of the water level is 1mm.

The step value of CO concentration is 1mg/m3.

The step value of O2 concentration is 1mg/m3.

The step value of the pressure is 1 MPa.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (waste storage pit temperature, humidity, negative pressure in the furnace, layer thickness, the water level of boiler, CO concentration in the incinerator, O2 concentration, temperature in the incinerator, superheated steam pressure, superheated steam temperature, the feed water temperature of boiler, the working pressure of boiler drum, hot air temperature, exhaust temperature, and the water level of boiler drum), operational data (the fermentation time of waste in storage pit, feeding time point, the residence time of feeder, feeder stroke, the residence time of waste in each grate, the movement speed of each grate, time point of primary air supply, air pressure, air temperature and air volume; the residence time of waste in the incinerator, and set temperature in the incinerator) and evaluation data (the current steam flow) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The fermentation time of waste in storage pit, feeding time point, the residence time of feeder, feeder stroke, the residence time of waste in each grate, the movement speed of each grate, time point of primary air supply, air pressure, air temperature and air volume; the residence time of waste in the incinerator, and set temperature in the incinerator in the knowledge record are used as recommended data and support for settings of air conditioning.

In step S60, the recommended suggestions can be offered to workers for operation, or can be directly controlled by the air-conditioning system.

In S70, the process goes to step S30.

Example 25

Control for aluminum alloy refining operation

Process: feeding melt into holding furnace → adding alloy → hydrogen removal → slag removal and refining → slag removal and coverage → standing (15-30 minutes) → melt composition inspection and testing → adjustment of alloy composition → adjustment of temperature → qualified aluminum alloy melt → pouring preparation.

The main purpose of aluminum alloy refining is to remove the gas and non-metallic inclusions from the melt and to uniform the alloy composition. Refining is an extremely important process in smelting. In refining, the refining agent should be correctly selected, and its dosage (0.5%-0.7% of the alloy by mass) and the refining temperature (700°C to 720°C) should be well controlled. During the refining process, a bell jar is used to press the refining agent to about 2/3 under the molten metal surface in batches, and the molten metal is then stirred clockwise evenly and slowly. The molten metal should be stirred slowly and stably to avoid the increase of hydrogen content and introduction of inclusions. Therefore, it is required to comprehensively consider refining temperature, refining time, nitrogen pressure, nitrogen consumption, nitrogen injection time before charging, nitrogen injection time after charging, refining agent dosage, powder feeding speed and other factors, and through the application of artificial intelligence system, the refining agent dosage is reduced. In this way, the lower gas content of the aluminum melt is achieved.

The process flow of this embodiment:
In step S10, three data dimensions are determined.

Basic work conditions: molten aluminum temperature, molten aluminum composition (Fe, Si, Ti, CO, CO2, H2, and the like), and nitrogen pressure.

Operational data: refining time, nitrogen flow rate, nitrogen injection time before charging, nitrogen injection time after charging, refining agent dosage, and the powder feeding speed of the refining agent.

Optimization objective: to reduce the refining agent dosage, and achieve the lower gas content of the aluminum melt.

Constraints: the dosage of the refining agent is less than the configuration value.

In step S20, a subdivision rule is set for each data dimension of the basic work conditions.

The isometric classification method is carried out in this example.

Upper and lower step limits are set for molten aluminum temperature, molten aluminum composition (Fe, Si, Ti, CO, CO2, H2, and the like), and nitrogen pressure.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (molten aluminum temperature, molten aluminum composition (Fe, Si, Ti, CO, CO2, H2, and the like), and nitrogen pressure), operational data (refining time, nitrogen flow rate, nitrogen injection time before charging, nitrogen injection time after charging, refining agent dosage, and the powder feeding speed of the refining agent) and evaluation data (the gas content of the melt) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The refining time, the nitrogen flow rate, the nitrogen injection time before charging, the nitrogen injection time after charging, the refining agent dosage, and the powder feeding speed of the refining agent in the knowledge record are used as recommended suggestions.

In step S60, the recommended suggestions can be offered to workers for operation, or can be directly controlled by the DCS system of the device.

In S70, the process goes to step S30.

Example 26

Heating control for aluminum alloy smelting

Process: preparation of aluminum alloy material (in smelting furnace) → batch calculation → smelting process control (addition of temperature-controlled alloy) → alloy smelting → electromagnetic stirring.

During the smelting process of aluminum alloy, smelting temperature, smelting time, heating speed and other factors have a great influence on the oxidative burning loss. If the smelting temperature is too high, the oxidation of the alloy can be aggravated; the faster the heating speed, the shorter the smelting time and the less the oxidative burning loss of the alloy. Therefore, the selection of heating conditions for aluminum alloy smelting actually focuses on the problem of how to reduce the time it takes to react with oxygen at a high temperature during the smelting process. Therefore, it is required to comprehensively consider charging sequence, smelting temperature, smelting time, oil pressure, oil quantity, fuel ratio, the flow rate of combustion-supporting air, covering agent dosage and other factors. Through the application of artificial intelligence system, the aluminum smelting process is controlled accurately and the oxidative burning loss of the aluminum alloy is reduced.

The process flow of this embodiment:

In step S10, three data dimensions are determined.

Basic work conditions: type of aluminum material, furnace pressure, furnace temperature, and smelting speed of aluminum material.

Operational data: charging sequence, smelting temperature, smelting time, oil pressure, oil quantity, fuel ratio, the flow rate of combustion-supporting air, and covering agent dosage.

Optimization objective: to achieve accurate control for the aluminum smelting process.

Constraints: the heating rate, the smelting temperature, the heating rate, and fuel ratio of the melting furnace are in their configuration ranges.

In step S20, a subdivision rule is set for each data dimension of the basic work conditions.

The isometric classification method is carried out in this example.

Upper and lower step limits are set for the type of aluminum material, the furnace pressure, the furnace temperature, and the smelting speed of aluminum material.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the type of aluminum material, furnace pressure, furnace temperature, and smelting speed), operational data (charging sequence, smelting temperature, smelting time, oil pressure, oil quantity, fuel ratio, the flow rate of combustion-supporting air, and covering agent dosage) and evaluation data (burning rate and energy consumption) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The charging sequence, the smelting temperature, the smelting time, the oil pressure, the oil quantity, the fuel ratio, the flow rate of combustion-supporting air, and the covering agent dosage in the knowledge record are used as recommended suggestions.

In step S60, the recommended suggestions can be offered to workers for operation, or can be directly controlled by the DCS system of the device.

In S70, the process goes to step S30.

Example 27

Control for aluminum electrolysis

Process: aluminium oxide is dissolved in the molten cryolite melt to form a uniform melt with good electrical conductivity. An anode and a cathode are made of a carbon material. When direct current is turned on, an electrochemical reaction occurs on the two electrodes. Anode gas is generated on the anode, and liquid aluminum is precipitated on the cathode. The liquid aluminum is periodically sucked out from a reduction cell by vacuum ladle and sent to an attached foundry to be cast as aluminum ingots for remelting. In the normal processing of the reduction cell, the cell controller controls the feeding interval and feeding amount according to the aluminium oxide concentration. In the actual production process, due to external factors such as equipment, it is often required to manually adjust the feeding interval to meet the production needs. The aluminum electrolysis process is greatly affected by strong nonlinearity and various unpredictable factors. It is not easy to measure the concentration of aluminium oxide in the reduction cell. Moreover, the actual controllable aluminium oxide concentration range of the reduction cell is different under different cell conditions. Therefore, it is difficult to precisely control the aluminium oxide concentration in the reduction cell. At present, the control range of aluminium oxide concentration for large-scale pre-baked aluminum reduction cells in China is from 1.5% to 3.5%. If the aluminum oxide concentration is too high in the electrolysis process, it will cause problems such as precipitation at the bottom of the cell, instability of the aluminum liquid layer, and increased resistance. When the concentration is too low, the anode effect is likely to occur, which reduces the current efficiency. Therefore, it is required to comprehensively consider voltage, aluminium oxide feeding amount, aluminium oxide feeding interval, electrolytic cell temperature, electrolyte molecular ratio, pole distance, aluminum level, electrolyte level, the thickness of thermal insulation material, and other factors. Through the application of artificial intelligence system, the lower power consumption of aluminum electrolysis is achieved.

The process flow of this embodiment:

In step S10, three data dimensions are determined.

Basic work conditions: reduction cell station, average cell voltage, aluminium oxide composition (moisture content, sodium content, and the like), aluminium oxide form (sandy aluminium oxide and powdery aluminium oxide), and the thickness of thermal insulation material.

Operational data: voltage, aluminium oxide feeding amount, aluminium oxide feeding interval, cell temperature, electrolyte molecular ratio, pole distance, aluminum level, and electrolyte level.

Optimization objective: to achieve lower power consumption of aluminum electrolysis.

Constraints: The current intensity, the magnetic field distribution of the reduction cell, and the aluminum output are in the configuration ranges.

In step S20, a subdivision rule is set for each data dimension of the basic work conditions.

The isometric classification method is carried out in this example.

Upper and lower step limits are set for the reduction cell station, the average cell voltage, the aluminium oxide composition (moisture content, sodium content, and the like), the aluminium oxide form (sandy aluminium oxide and powdery aluminium oxide), and the thickness of thermal insulation material.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (reduction cell station, average cell voltage, aluminium oxide composition (moisture content, sodium content, and the like), aluminium oxide form (sandy aluminium oxide and powdery aluminium oxide), and the thickness of thermal insulation material.), operational data (voltage, aluminium oxide feeding amount, aluminium oxide feeding interval, cell temperature, electrolyte molecular ratio, pole distance, aluminum level, and electrolyte level) and evaluation data (aluminum output and unit power consumption) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The voltage, the aluminium oxide feeding amount, the aluminium oxide feeding interval, the cell temperature, the electrolyte molecular ratio, the pole distance, the aluminum level, and the electrolyte level in the knowledge record are used as recommended suggestions.

In step S60, the recommended suggestions can be offered to workers for operation, or can be directly controlled by the DCS system of the device.

In S70, the process goes to step S30.

Example 28

Control for chlortetracycline hydrochloride extraction - crystallization

The whole extraction process of chlortetracycline hydrochloride product includes: acidification filtration - conversion to double salt filtration - coarse crystal filtration - coarse crystal dissolution filtration - crystallization filtration - washing - drying process, in which crystallization is the key link affecting the chemical potency of the product. In the crystallization process, different operations for start addition temperatures of hydrochloric acid, hydrochloric acid proportioning instructions, hydrochloric acid addition rates, holding temperatures, holding time, and stirring speed/transformation will affect the chemical potency of the product.

The process flow of this embodiment:
In step S10, three data dimensions are determined.

Basic work conditions: the volume of extract solution (filtrate obtained after dissolving and filtration of crude crystals), the chemical potency of the extraction solution, the ambient temperature value of crystallization, and the initial liquid level of a hydrochloric acid metering tank.

Operational data: start addition temperatures of hydrochloric acid, hydrochloric acid proportioning instruction, hydrochloric acid addition rate, holding temperature, holding time, and stirring speed/transformation.

Optimization objective: to achieve higher unit chemical potency of veterinary antibiotics.

Constraints: the product quality meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked.

If all the constraints are met, the basic work condition data (the volume of extract solution, the chemical potency of the extraction solution, the ambient temperature value of crystallization, and the initial liquid level of a hydrochloric acid metering tank), operational data (the start addition temperatures of hydrochloric acid, hydrochloric acid proportioning instruction, hydrochloric acid addition rate, holding temperature, holding time, and stirring speed/transformation) and evaluation data (the unit chemical potency of veterinary antibiotics) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The start addition temperatures of hydrochloric acid, the hydrochloric acid proportioning instruction, the hydrochloric acid addition rate, the holding temperature, the holding time, and the stirring speed/transformation in the knowledge record are used as recommended data and support for settings of crystallization.

In step S60, the recommended suggestions can be offered to workers for operation, or can be directly controlled by the DCS system of the device.

In S70, the process goes to step S30.

Example 29

Control for penicillin extraction - solvent extraction

The whole extraction process of penicillin includes: fermentation broth filtration → primary extraction → back extraction → secondary extraction → decolorization → crystallization → filtration → drying → finished product, in which extraction is a key link of the whole extraction process. The process of solvent extraction of penicillin includes mixing an organic solvent with the pretreated and filtered filtrate penicillin fermentation broth and then adjusting the pH value to transfer penicillin into the solvent from the aqueous phase, thus achieving the purpose of purification and concentration. During this process, different extraction controls, such as the dosage of the extraction solvent, the dosage of water, the PH value of the filtrate, the temperature of the filtrate, the flow rate of the extraction agent, extraction time, extraction pressure, centrifugation time, centrifugation speed, and the like, directly affect the extraction effect of penicillin (unit extraction rate of penicillin).

The process flow of this embodiment:

In step S10, three data dimensions are determined.

Basic work conditions: filtrate volume and potency, and material properties.

Operational data: the dosage of the extraction solvent, the dosage of water, the PH value of the filtrate, the temperature of the filtrate, the flow rate of the extraction agent, extraction time, extraction pressure, centrifugation time, and centrifugation speed.

Optimization objective: to achieve a higher unit extraction rate of penicillin.

Constraints: the product quality meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (filtrate volume and potency, and material properties), operational data (the dosage of the extraction solvent, the dosage of water, the PH value of the filtrate, the temperature of the filtrate, the flow rate of the extraction agent, extraction time, extraction pressure, centrifugation time, and centrifugation speed) and evaluation data (the unit extraction rate of penicillin) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The dosage of the extraction solvent, the dosage of water, the PH value of the filtrate, the temperature of the filtrate, the flow rate of the extraction agent, the extraction time, the extraction pressure, the centrifugation time, and the centrifugation speed in the knowledge record are used as recommended data and support for settings of solvent extraction.

In step S60, the recommended suggestions can be offered to workers for operation, or can be directly controlled by the DCS system of the device.

In S70, the process goes to step S30.

Example 30

Control for pharmaceutical wastewater treatment of penicillin

In the production process of penicillin, high-concentration organic wastewater is produced. The COD content in the wastewater is high, and the wastewater contains a relatively high concentration of sulfate. The discharged wastewater has a high concentration of pollutants. In the two-stage activated sludge treatment process using an aerobic method, different controls, such as the dosage and addition time of each treatment agent, and the parameter settings of the wastewater treatment device (water valve flow, fan speed, compressor speed, and the like) directly affect the unit treatment cost of wastewater.

The process flow of this embodiment:

In step S10, three data dimensions are determined.

Basic work conditions: water volume, wastewater composition (COD, ammonia nitrogen content, inorganic pollutant content, sulfate content, and the like), wastewater pH, and ambient temperature.

Operational data: the dosage and addition time of each treatment agent and the parameter settings (water valve flow, fan speed, compressor speed, and the like) of the wastewater treatment device.

Optimization objective: to achieve lower unit treatment cost of wastewater.

Constraints: wastewater meets the discharge standard.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (water volume, wastewater composition (COD, ammonia nitrogen content, inorganic pollutant content, sulfate content, and the like), wastewater pH, and ambient temperature), operational data (the dosage and addition time of each treatment agent and the parameter settings of the wastewater treatment device) and evaluation data (unit treatment cost of wastewater) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The dosage and addition time of each treatment agent and the parameter settings of the wastewater treatment device are used as recommended data and support for settings of wastewater treatment.

In step S60, the recommended suggestions can be offered to workers for operation, or can be directly controlled by the DCS system of the device.

In S70, the process goes to step S30.

Example 31

Control for pulp pretreatment

A method for preparing fiber pulp, comprising the following steps: (1) soaking chopped fibers in water to control the moisture content; (2) soaking the chopped fibers obtained in step (1) in liquid nitrogen; and (3) mechanically grinding the chopped fibers obtained in step (2) by a vertical vortex mill to achieve fibrillation treatment, and then separate the fibers from air by a cyclone separator to obtain the fiber pulp.

The process flow of this embodiment:

In step S10, three data dimensions are determined.

Basic work conditions: fiber type, filament number, and elastic modulus.

Operational data: pretreatment pressure, pretreatment time, pretreatment temperature, and the rotating speed of vertical vortex mill.

Optimization objective: to improve the degree of pulp polymerization.

Constraints: the quality (specific surface area, average length, and the like) of the fiber pulp meets the requirements.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (fiber type, filament number, and elastic modulus), operational data (pretreatment pressure, pretreatment time, pretreatment temperature, and the rotating speed of the vertical vortex mill) and evaluation data (pulp polymerization) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The pretreatment pressure, the pretreatment time, the pretreatment temperature, and the rotating speed of the vertical vortex mill in the knowledge record are used as recommended data and support for operation settings of pulp pretreatment.

In step S60, the recommended suggestions can be offered to workers for operation, or can be directly controlled by the DCS system of the device.

In S70, the process goes to step S30.

Example 32

Control for fibrinolysis

The cellulose pulp is dissolved in the organic solvent N-methylmorphine-N-oxide (NMMO) to prepare the spinning dope, and the spinning solution is filtered to remove impurities.

The process flow of this embodiment:
In step S10, three data dimensions are determined.

Basic work conditions: the specific surface area of pulp, NMMO concentration, the average length of pulp, pulp volume, and pulp temperature.

Operational data: swelling temperature, NMMO dosage, dissolution time, and vacuum degree.

Optimization objective: to reduce the content of gel particles in the spinning solution.

Constraints: the concentration of the spinning solution meets the requirements.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the specific surface area of pulp, NMMO concentration, the average length of pulp, pulp volume, and pulp temperature), operational data (swelling temperature, NMMO dosage, dissolution time, and vacuum degree) and evaluation data (the content of gel particles in the spinning solution) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The swelling temperature, the NMMO dosage, the dissolution time, and the vacuum degree in the knowledge record are used as recommended data and support for operation settings of fibrinolysis.

In step S60, the recommended suggestions can be offered to workers for operation, or can be directly controlled by the DCS system of the device.

In S70, the process goes to step S30.

Example 33

Control for fiber spinning

A complete set of spinning machine equipment is composed of a spinneret, a coagulation bath, and a blower, and the spinning operation is carried out by using the spinning machine equipment. The spinning solution is output through a spinning metering pump, flows through a buffer, enters a spinneret assembly and is ejected, and then enters the coagulation solution and is coagulated into coagulated filaments by a wet or dry-wet spinning process.

The process flow of this embodiment:

In step S10, three data dimensions are determined.

Basic work conditions: product specifications, spinneret hole diameter, aspect ratio, number of spinneret holes, and number of spinnerets per spinning position.

Operational data: spinning temperature, spinneret extrusion speed, spinning draft speed, air gap length, center blowing temperature, blowing volume, coagulation bath temperature, and coagulation bath concentration.

Optimization objective: to reduce steam consumption in the spinning process.

Constraints: the solvent precipitation rate meets the requirements.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (product specifications, spinneret hole diameter, aspect ratio, number of spinneret holes, and number of spinnerets per spinning position), operational data (spinning temperature, spinneret extrusion speed, spinning draft speed, air gap length, center blowing temperature, blowing volume, coagulation bath temperature, and coagulation bath concentration) and evaluation data (the steam consumption in the spinning process) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The spinning temperature, the spinneret extrusion speed, the spinning draft speed, the air gap length, the center blowing temperature, the blowing volume, the coagulation bath temperature, and the coagulation bath concentration in the knowledge record are used as recommended data and support for operation settings of fiber spinning.

In step S60, the recommended suggestions can be offered to workers for operation, or can be directly controlled by the DCS system of the device.

In S70, the process goes to step S30.

Example 34

Control for energy consumption of fiber washing

The coagulated filaments are washed with water by beating with a patterned roller, and the washing water flows countercurrently.

The process flow of this embodiment:

In step S10, three data dimensions are determined.

Basic work conditions: filament specifications and filament travel speed.

Operational data: draft ratio, first pass (washing temperature, flow rate, and solvent content), and second pass (water washing temperature, flow rate, and solvent content).

Optimization objective: to reduce water consumption in the washing process.

Constraints: the quality (fiber number, fiber length, dry strength, elongation at break, wet strength, and moisture regain) of finished filaments meets the requirements.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (filament specifications and filament travel speed), operational data (draft ratio, first pass (washing temperature, flow rate, and solvent content), and second pass (water washing temperature, flow rate, and solvent content)) and evaluation data (water consumption in the washing process) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The draft ratio, the first pass (washing temperature, flow rate, and solvent content), and the second pass (water washing temperature, flow rate, and solvent content) in the knowledge record are used as recommended data and support for operation settings of energy consumption of fiber washing.

In step S60, the recommended suggestions can be offered to workers for operation, or can be directly controlled by the DCS system of the device.

In S70, the process goes to step S30.

Example 35

Control for solvent recovery in fiber washing

The coagulated filaments are washed with water by beating with a patterned roller, and the washing water flows countercurrently.

The process flow of this embodiment:

In step S10, three data dimensions are determined.

Basic work conditions: filament specifications and filament travel speed.

Operational data: draft ratio, first pass (washing temperature, flow rate, and solvent content), and second pass (water washing temperature, flow rate, and solvent content).

Optimization objective: to achieve highest solvent recovery rate in the washing process.

Constraints: the quality (fiber number, fiber length, dry strength, elongation at break, wet strength, and moisture regain) of finished filaments meets the requirements.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (filament specifications and filament travel speed), operational data (draft ratio, first pass (washing temperature, flow rate, and solvent content), and second pass (water washing temperature, flow rate, and solvent content)) and evaluation data (solvent recovery rate in the washing process) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The draft ratio, the first pass (washing temperature, flow rate, and solvent content), and the second pass (water washing temperature, flow rate, and solvent content) in the knowledge record are used as recommended data and support for operation settings of solvent recovery in the washing process.

In step S60, the recommended suggestions can be offered to workers for operation, or can be directly controlled by the DCS system of the device.

In S70, the process goes to step S30.

Example 36

Control for fiber drying

After washing and drawing, modified silicone oil or non-silicon oil is applied the coagulated filaments. The coagulated filaments are dried and densified with a hot roller.

The process flow of this embodiment:

In step S10, three data dimensions are determined.

Basic work conditions: fiber specifications and the initial moisture content of filaments.

Operational data: drying temperature, spindle speed, and drying time.

Optimization objective: to reduce drying time.

Constraints: the moisture content of filaments and the fiber strength reach the standards.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (fiber specifications and the initial moisture content of filaments), operational data (drying temperature, spindle speed, and drying time) and evaluation data (drying time) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The drying temperature, the spindle speed, and the drying time in the knowledge record are used as recommended data and support for operation settings of fiber drying.

In step S60, the recommended suggestions can be offered to workers for operation, or can be directly controlled by the DCS system of the device.

In S70, the process goes to step S30.

Example 37

Control for wastewater treatment in environmentally friendly fiber production

Organics in wastewater generated in environmentally friendly fiber production are removed by the process of hydrolysis acidification cell + A2/O + high-density sedimentation cell + ozone catalytic oxidation cell + D-type filtering cell.

The process flow of this embodiment:

In step S10, three data dimensions are determined.

Basic work conditions: wastewater volume, wastewater composition (COD, ammonia nitrogen content, inorganic pollutant content, oil and wax content, and the like), wastewater pH, and ambient temperature.

Operational data: the dosage and addition time of each treatment agent and the parameter settings (water valve flow, fan speed, compressor speed, and the like) of the wastewater treatment device.

Optimization objective: to reduce the cost of wastewater treatment.

Constraints: wastewater meets the discharge standard.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (water volume, wastewater composition, wastewater pH, and ambient temperature), operational data (the dosage and addition time of each treatment agent and the parameter settings of the wastewater treatment device) and evaluation data (the cost of wastewater treatment) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The dosage and addition time of each treatment agent and the parameter settings of the wastewater treatment device are used as recommended data and support for operation settings of wastewater treatment in the environmentally friendly fiber production.

In step S60, the recommended suggestions can be offered to workers for operation, or can be directly controlled by the DCS system of the device.

In S70, the process goes to step S30.

Example 38

Optimal operation scheme of ironmaking and sintering blending

According to the product quality requirements of the blast furnace for sinter and the chemical properties of the raw materials, various raw materials, solvents, fuels, substitutes, and returned ore are added in a certain proportion. ① Batching: sinter with stable chemical composition and physical properties is obtained through batching, and the obtained sinter meets the requirements of blast furnace smelting. ② Mixing: the sinter is wetted and mixed with water and then pelletized, so that the sintered material has uniform the composition and proper moisture content and can be pelletized easily. In this way, a sintered mixture with good particle size and composition is obtained, so as to ensure the quality of sinter and improve the sintering rate.

The process flow of this embodiment:

In step S10, three data dimensions are determined.

Basic work conditions: the theoretical iron content of iron ore powder, the density of iron ore powder, the hydrophilicity of iron ore powder, the assimilation of iron ore powder, the fluidity of iron ore powder, the porosity of iron ore powder, the particle size of iron ore powder, the composition and content of iron ore powder; solvent type, the oxide content of solvents, the solvent impurity (S and P) content of solvents, solvent particle size; the ash content of fuel, the volatile content of fuel, fuel particle size, equipment conditions (sticky material, batch turning); quality index requirements for sinter (the total iron content of sinter, the iron oxide content of sinter, the sulfur content of sinter, the alkalinity of sinter, the drum index of sinter, and the sieving index of sinter).

Operational data: ore powder dosage, solvent type, the dosage of each solvent, fuel dosage, drum speed, running direction, and addition of water for uniform mixing.

Optimization objective: to achieve a higher sintering rate.

Constraints: The mixing uniformity, air permeability and moisture content of the sintered material are all within the set upper and lower limits.

In step S20, a subdivision rule is set for each data dimension of the basic work conditions.

Upper and lower step limits are set for the theoretical iron content of iron ore powder, the density of iron ore powder, the hydrophilicity of iron ore powder, the assimilation of iron ore powder, the fluidity of iron ore powder, the porosity of iron ore powder, the particle size of iron ore powder, the composition and content of iron ore powder; solvent type, the oxide content of solvents, the solvent impurity (S and P) content of solvents, solvent particle size; the ash content of fuel, the volatile content of fuel, fuel particle size, equipment conditions (sticky material, batch turning); quality index requirements for sinter (the total iron content of sinter, the iron oxide content of sinter, the sulfur content of sinter, the alkalinity of sinter, the drum index of sinter, and the sieving index of sinter), and the like.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the theoretical iron content of iron ore powder, the density of iron ore powder, the hydrophilicity of iron ore powder, the assimilation of iron ore powder, the fluidity of iron ore powder, the porosity of iron ore powder, the particle size of iron ore powder, the composition and content of iron ore powder; solvent type, the oxide content of solvents, the solvent impurity (S and P) content of solvents, solvent particle size; the ash content of fuel, the volatile content of fuel, fuel particle size, equipment conditions (sticky material, batch turning); quality index requirements for sinter (the total iron content of sinter, the iron oxide content of sinter, the sulfur content of sinter, the alkalinity of sinter, the drum index of sinter, and the sieving index of sinter), operational data (ore powder dosage, solvent type, the dosage of each solvent, fuel dosage, drum speed, running direction, and addition of water for uniform mixing) and evaluation data (the yield of sinter) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The ore powder dosage, the solvent type, the dosage of each solvent, the fuel dosage, the drum speed, the running direction, and addition of water for uniform mixing in the knowledge record are used as recommended suggestions.

In step S60, the recommended suggestions can be offered to workers for operation, or can be directly controlled by the DCS system of the device.

In S70, the process goes to step S30.

Example 39

Optimal operation scheme for ironmaking and sintering

The iron-making raw materials provided by raw material providers are crushed and screened, and then batched and subjected to primary mixing and secondary mixing. After a series of processes such as thoroughly mixing iron ore powder, powder (anthracite) and lime in a certain proportion and adding water, the mixture is sent to a sintering machine trolley for ignition and combustion to form sinter. The sinter then goes through the pelletizing process to become sintered pellets. The obtained sintered pellets are sent to a blast furnace. ① Material distribution: spreading the base material and the mixed material on the sintering machine trolley for operation. ②Ignition: igniting the surface of the material layer on the trolley so that the material burns. ③Sintering: accurately controlling air volume, vacuum degree, material layer thickness, machine speed and sintering end point in the sintering process. The sintered product is sinter with sufficient strength and particle size, which is used as clinker for iron making in the next process.

The process flow of this embodiment:
In step S10, three data dimensions are determined.

Basic work conditions: the content of iron ore powder in sintered material, the type of solvents in sintered material, the content of each solvent in sintered material, fuel content of sintered material, the moisture content of sintered material, composition of padding, and the particle size of padding.

Operational data: the thickness of sintered material spread, padding thickness, gas pressure, flow rate, combustion-supporting air pressure, flow rate, air-fuel ratio, sintering machine speed, negative pressure for sintering, and ignition temperature.

Optimization objective: to reduce the unit gas consumption of sinter.

Constraints: quality requirements of sinter (the total iron content of sinter, the iron oxide content of sinter, the sulfur content of sinter, the alkalinity of sinter, the drum index of sinter, and the sieving index of sinter) meet the standard configuration values.

In step S20, a subdivision rule is set for each data dimension of the basic work conditions.

Upper and lower step limits are set for the content of iron ore powder in sintered material, the type of solvents in sintered material, the content of each solvent in sintered material, fuel content of sintered material, the moisture content of sintered material, composition of padding, and the particle size of padding.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the content of iron ore powder in sintered material, the type of solvents in sintered material, the content of each solvent in sintered material, fuel content of sintered material, the moisture content of sintered material, composition of padding, and the particle size of padding), operational data (the thickness of sintered material spread, padding thickness, gas pressure, flow rate, combustion-supporting air pressure, flow rate, air-fuel ratio, sintering machine speed, negative pressure for sintering, and ignition temperature) and evaluation data (the unit gas consumption of sinter) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The thickness of sintered material spread, padding thickness, gas pressure, flow rate, combustion-supporting air pressure, flow rate, air-fuel ratio, sintering machine speed, negative pressure for sintering, and ignition temperature in the knowledge record are used as recommended suggestions.

In step S60, the recommended suggestions can be offered to workers for operation, or can be directly controlled by the DCS system of the device.

In S70, the process goes to step S30.

Example 40

Optimal operation scheme for blast furnace batching

After processing, the qualified coke, sinter, pellets, auxiliary materials, and the liked are transported to the blast furnace silo for storage and use. After all kinds of charging materials are screened and weighed under the cell, they are transported to a blast furnace charging truck by a belt conveyor according to the batching procedure, and then pulled to the top of the furnace by the charging truck through an inclined bridge and charged into the blast furnace.

The process flow of this embodiment:

In step S10, three data dimensions are determined.

Basic work conditions: physicochemical properties of sinter (the total iron content of sinter, the iron oxide content of sinter, the sulfur content of sinter, the alkalinity of sinter, the drum index of sinter, the sieving index of sinter, sinter uniformity, sinter permeability, and the like), physicochemical properties of coke (fixed carbon content, ash content, volatile content, impurity content, and particle size), physicochemical properties of auxiliary materials (oxide content and impurity content); composition requirements for molten iron, temperature requirements for molten iron, and composition requirements for slag.

Operational data: the dosage of each raw material (crushed sinter, pellets, coke, auxiliary materials, and the like)

Optimization objective: to achieve lower total consumption of ingredients per ton of hot metal in the blast furnace.

Constraints: The quality parameters of molten iron meet the configuration values.

In step S20, a subdivision rule is set for each data dimension of the basic work conditions.

Upper and lower step limits are set for the physicochemical properties of sinter (the total iron content of sinter, the iron oxide content of sinter, the sulfur content of sinter, the alkalinity of sinter, the drum index of sinter, the sieving index of sinter, sinter uniformity, sinter permeability, and the like), the physicochemical properties of coke (fixed carbon content, ash content, volatile content, impurity content, and particle size), the physicochemical properties of auxiliary materials (oxide content and impurity content); composition requirements for molten iron, temperature requirements for molten iron, and composition requirements for slag.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work conditions (physicochemical properties of sinter (the total iron content of sinter, the iron oxide content of sinter, the sulfur content of sinter, the alkalinity of sinter, the drum index of sinter, the sieving index of sinter, sinter uniformity, sinter permeability, and the like), physicochemical properties of coke (fixed carbon content, ash content, volatile content, impurity content, and particle size), physicochemical properties of auxiliary materials (oxide content and impurity content); composition requirements for molten iron, temperature requirements for molten iron, and composition requirements for slag), the operational data (the dosage of each raw material (crushed sinter, pellets, coke, auxiliary materials, and the like) and evaluation data total consumption of ingredients per ton of hot metal in the blast furnace) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The dosage of each raw material (crushed sinter, pellets, coke, auxiliary materials, and the like) in the knowledge record is used as recommended suggestions.

In step S60, the recommended suggestions can be offered to workers for operation, or can be directly controlled by the DCS system of the device.

In S70, the process goes to step S30.

Example 41

Optimal control scheme for blast furnace combustion

The cold air blown from a blower room is heated into hot air by the hot blast heater. The hot air is blown into a tuyere at the lower part of the blast furnace and combusts with the coke in the charge and the injected pulverized coal, producing high-temperature reducing gases CO and H2. The gases exchange heat with the descending charge while rising, so that the charge is heated and the reduction reaction occurs. The reduced sponge iron is further melted and carburized, and finally molten iron is formed.

The process flow of this embodiment:

In step S10, three data dimensions are determined.

Basic work conditions: raw material ratio (sinter content, pellet content, coke content, auxiliary material content), temperature requirements for molten iron, composition requirements for molten iron, hearth temperature, and furnace body temperature.

Operational data: thickness of iron ore layer, thickness of fuel and auxiliary material layer, injection rate of pulverized coal, hot air temperature, and wind speed.

Optimization objective: to achieve a higher yield of molten iron in a fixed period.

Constraints: The quality parameters of molten iron meet the configuration values.

In step S20, a subdivision rule is set for each data dimension of the basic work conditions.

Upper and lower step limits are set for the raw material ratio (sinter content, pellet content, coke content, and auxiliary material content), temperature requirements for molten iron, composition requirements for molten iron, hearth temperature, furnace body temperature, and the like.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (raw material ratio (sinter content, pellet content, coke content, auxiliary material content), temperature requirements for molten iron, composition requirements for molten iron, hearth temperature, and furnace body temperature), operational data (thickness of iron ore layer, thickness of fuel and auxiliary material layer, injection rate of pulverized coal, hot air temperature, and wind speed) and evaluation data (the yield of molten iron in a fixed period) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The thickness of iron ore layer, the thickness of fuel and auxiliary material layer, the injection rate of pulverized coal, the hot air temperature, and the wind speed in the knowledge record are used as recommended suggestions.

In step S60, the recommended suggestions can be offered to workers for operation, or can be directly controlled by the DCS system of the device.

In S70, the process goes to step S30.

Example 42

Optimal operation scheme of molten iron pre-desulfurization (injection method)

A molten iron desulfurization system is mainly composed of a lime powder silo, a magnesium powder silo, a lime powder injection tank, a magnesium powder injection tank, powder spray guns, temperature measurement/sampling guns and other parts. Using nitrogen as the carrier gas, the raw material powders-lime powder and magnesium powder are automatically compounded and injected into the molten iron tank. After chemical action, the desulfurized slag floats up to the surface of the molten iron. After passing the sampling test, the slag is removed and the molten iron enters the next process. Iron loss is caused because the slag carries iron or due to the slag removal operation.

The process flow of this embodiment:
In step S10, three data dimensions are determined.

Basic work conditions: temperature of molten iron before desulfurization, weight of molten iron before desulfurization, composition of molten iron before desulfurization, desulfurization station, age of injection gun, purity of passivated magnesium, purity of passivated lime, and target value of S content of molten iron after desulfurization.

Operational data: injection pressure of passivated magnesium, injection rate of passivated magnesium, injection time of passivated magnesium, injection volume of passivated magnesium, injection pressure of passivated lime, injection rate of passivated lime, injection time of passivated lime, injection volume of passivated lime, lime-magnesium powder ratio, and flow rate of nitrogen-assisted blowing.

Optimization objective: to achieve lower desulfurizer consumption and less iron loss.

Constraints: the S content of molten iron after desulfurization meets the configuration value.

In step S20, a subdivision rule is set for each data dimension of the basic work conditions.

Upper and lower step limits are set for the temperature of molten iron before desulfurization, the weight of molten iron before desulfurization, the composition of molten iron before desulfurization, the desulfurization station, the age of injection gun, the purity of passivated magnesium, the purity of passivated lime, and the target value of S content of molten iron after desulfurization.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (temperature of molten iron before desulfurization, weight of molten iron before desulfurization, composition of molten iron before desulfurization, desulfurization station, age of injection gun, purity of passivated magnesium, purity of passivated lime, and target value of S content of molten iron after desulfurization), temperature requirements for molten iron, composition requirements for molten iron, hearth temperature, and furnace body temperature), operational data (injection pressure of passivated magnesium, injection rate of passivated magnesium, injection time of passivated magnesium, injection volume of passivated magnesium, injection pressure of passivated lime, injection rate of passivated lime, injection time of passivated lime, injection volume of passivated lime, lime-magnesium powder ratio, and flow rate of nitrogen-assisted blowing) and evaluation data (desulfurizer consumption and iron loss) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The injection pressure of passivated magnesium, the injection rate of passivated magnesium, the injection time of passivated magnesium, the injection volume of passivated magnesium, the injection pressure of passivated lime, the injection rate of passivated lime, the injection time of passivated lime, the injection volume of passivated lime, the lime-magnesium powder ratio, and the flow rate of nitrogen-assisted blowing in the knowledge record are used as recommended suggestions.

In step S60, the recommended suggestions can be offered to workers for operation, or can be directly controlled by the DCS system of the device.

In S70, the process goes to step S30.

Example 43

Optimal operation scheme of molten iron pre-desulfurization (KR mechanical stirring method)

According to the KR (Kambara Reactor) mechanical stirring method, after slag removal and sampling, the molten iron in the blast furnace reaches the desulfurization station, and a stirring head cast with refractory materials and baked is immersed into the molten iron ladle molten pool to a certain depth. The stirring head rotates to cause vortexes. The weighed desulfurizer is added to the surface of the molten iron by the feeder, and is mixed into the molten iron by the vortexes, so that the desulfurizer and the molten iron fully react to form slag to achieve the purpose of desulfurization. After passing the sampling test, the slag is removed and the molten iron enters the next process. Iron loss is caused because the slag carries iron or due to the slag removal operation.

The process flow of this embodiment:

In step S10, three data dimensions are determined.

Basic work conditions: the weight of molten iron before desulfurization, the temperature of molten iron before desulfurization, the S content of molten iron before desulfurization, the purity of desulfurization agent, the level of molten iron, and the target value of S content of molten iron after desulfurization.

Operational data: height of stirring head, rotating speed of stirring head, stirring time, total dosage of desulfurizer, time of first addition of desulfurizer, weight of first addition of desulfurizer, time of second addition of desulfurizer, and weight of second addition of desulfurizer.

Optimization objective: to achieve lower desulfurizer consumption and less iron loss.

Constraints: the S content of molten iron after desulfurization meets the configured target value.

In step S20, a subdivision rule is set for each data dimension of the basic work conditions.

Upper and lower step limits are set for the weight of molten iron before desulfurization, the temperature of molten iron before desulfurization, the S content of molten iron before desulfurization, the purity of desulfurization agent, the level of molten iron, and the target value of S content of molten iron after desulfurization.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the weight of molten iron before desulfurization, the temperature of molten iron before desulfurization, the S content of molten iron before desulfurization, the purity of desulfurization agent, the level of molten iron, and the target value of S content of molten iron after desulfurization), operational data (height of stirring head, rotating speed of stirring head, stirring time, total dosage of desulfurizer, time of first addition of desulfurizer, weight of first addition of desulfurizer, time of second addition of desulfurizer, and weight of second addition of desulfurizer) and evaluation data (desulfurizer consumption and iron loss) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The height of stirring head, the rotating speed of stirring head, the stirring time, the total dosage of desulfurizer, the time of first addition of desulfurizer, the weight of first addition of desulfurizer, the time of second addition of desulfurizer, and the weight of second addition of desulfurizer in the knowledge record are used as recommended suggestions.

In step S60, the recommended suggestions can be offered to workers for operation, or can be directly controlled by the DCS system of the device.

In S70, the process goes to step S30.

Example 44

Control for black liquor combustion

The process flow of this embodiment:
In step S10, three data dimensions are determined.

Basic work conditions: black liquor concentration, black liquor flow, the pressure, flow and temperature of primary and secondary air at the outlet of air preheater, the flow and pressure of tertiary air, feed water temperature, feed water pressure, and drum water level.

Operational data: number of spray guns, fluid flow of spray gun, primary air, secondary air, tertiary air opening, feed water flow, and heavy oil flow.

Optimization objective: to achieve higher thermal efficiency of combustion in the alkali recovery furnace.

Calculation formula:

Thermal efficiency = effective use of heat / total heat that can be released by fuel * 100%

= boiler esteamation * (steam enthalpy - feed water enthalpy) / fuel consumption * low calorific value of fuel * 100%

= steam volume * (steam enthalpy - feed water enthalpy) / fuel consumption * low calorific value of fuel * 100%.

Constraints: the total air volume of the boiler, the water level of the steam drum, the temperature deviation of the upper and lower walls of the steam drum, the vibration value of the alkali recovery furnace, and the negative pressure in the furnace are less than the configuration values.

In step S20, a subdivision rule is set for each data dimension of the basic work conditions.

The isometric classification method is carried out in this example.

Upper and lower limits are set for the black liquor concentration.

Upper and lower limits are set for the black liquor flow.

Upper and lower limits are set for the pressure of primary air at the outlet of the air preheater.

Upper and lower limits are set for the pressure of secondary air.

Upper and lower limits are set for the flow and temperature.

Upper and lower limits are set for the pressure of secondary air.

Upper and lower limits are set for the feed water temperature.

Upper and lower limits are set for the feed water pressure.

Upper and lower limits are set for the drum water level.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the black liquor concentration, black liquor flow, the pressure, flow and temperature of primary and secondary air at the outlet of air preheater, the flow and pressure of tertiary air, feed water temperature, feed water pressure, and drum water level), operational data (number of spray guns, fluid flow of spray gun, primary air, secondary air, tertiary air opening, feed water flow, and heavy oil flow) and evaluation data (thermal efficiency of combustion in the alkali recovery furnace) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The number of spray guns, the fluid flow of spray gun, the primary air, secondary air, and tertiary air opening, feed water flow, and the heavy oil flow in the knowledge record are used as recommended suggestions.

In step S60, the recommended suggestions can be offered to workers for operation, or can be directly controlled by the DCS system of the device.

In S70, the process goes to step S30.

Example 45

Control for black liquor evaporation

The process flow of this embodiment:

In step S10, three data dimensions are determined.

Basic work conditions: black liquor composition, black liquor level (liquid levels of various evaporators, flash tank, black liquor cell and self-evaporator), the concentration of black liquor after treatment by each evaporator, and the effective total pressure difference of each evaporator.

Operational data: concentration of incoming diluted black liquor, incoming black liquor flow, incoming steam pressure, and incoming steam volume.

Optimization objective: to achieve lower unit consumption of total steam in black liquor evaporation.

Constraints: the concentration of the outlet black liquor is greater than or equal to the configuration value.

In step S20, a subdivision rule is set for each data dimension of the basic work conditions.

The isometric classification method is carried out in this example.

Upper and lower limits are set for black liquor composition.

Upper and lower limits are set for the black liquor level.

Upper and lower limits are set for the concentration of black liquor after treatment by each evaporator.

Upper and lower limits are set for the effective total pressure difference of each evaporator.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (black liquor composition, black liquor level (liquid levels of various evaporators, flash tank, black liquor cell and self-evaporator), the concentration of black liquor after treatment by each evaporator, and the effective total pressure difference of each evaporator), operational data (concentration of incoming diluted black liquor, incoming black liquor flow, incoming steam pressure, and incoming steam volume) and evaluation data (unit consumption of steam) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The concentration of incoming diluted black liquor, incoming black liquor flow, incoming steam pressure, and incoming steam volume in the knowledge record are used as recommended data and support for settings.

In step S60, the recommended suggestions can be offered to workers for operation, or can be directly controlled by the air-conditioning system.

In S70, the process goes to step S30.

Example 46

Bleaching Control

The process flow of this embodiment:

In step S10, three data dimensions are determined.

Basic conditions: residual chlorine values and whiteness values measured before treatment by the bleacher and after treatment by the static mixer, and paper specifications.

Operational data: pulp flow rate, flow of chlorine dioxide and chlorine gas, the steam flow of bleacher, and the steam flow of static mixer.

Optimization objective: to achieve lower unit consumption of pulp bleaching agent.

Constraints: the pulp kappa value is less than the configuration value, and the pulp concentration, bleacher temperature, and static mixer temperature are within the specified ranges.

In step S20, a subdivision rule is set for each data dimension of the basic work conditions.

The isometric classification method is carried out in this example.

Upper and lower limits are set for the residual chlorine values measured before treatment by the bleacher and after treatment by the static mixer.

Upper and lower limits are set for whiteness values measured before treatment by the bleaching tower and after treatment by the static mixer.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (residual chlorine values and whiteness values measured before treatment by the bleacher and after treatment by the static mixer, and paper specifications), operational data (pulp flow rate, flow of chlorine dioxide and chlorine gas, the steam flow of bleacher, and the steam flow of static mixer) and evaluation data (the unit consumption of pulp bleaching agent) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The pulp flow rate, flow of chlorine dioxide and chlorine gas, the steam flow of bleacher, and the steam flow of static mixer in the knowledge record are used as recommended data and support for settings.

In step S60, the recommended suggestions can be offered to workers for operation, or can be directly controlled by the air-conditioning system.

In S70, the process goes to step S30.

Example 47

Optimal control scheme of air-fuel ratio in steel rolling heating furnace

The combustion system of the heating furnace transports gas and combustion-supporting air to the burner through pipes. The gas burns to heat the billet in the heating furnace. The billet moves in the furnace and goes through the preheating section, heating section and soaking section of the heating furnace to complete the entire heating process, so that the temperature and uniformity of the billet meet the requirements. In the process of heating the billet in the heating furnace, if the fastest heating point can be found, the optimal value of the air-fuel ratio will be found. When the gas pipeline pressure, gas calorific value and air pipeline pressure fluctuate, the fastest heating point also will change, so the extreme value of the air-fuel ratio generally changes dynamically.

The process flow of this embodiment:

In step S10, three data dimensions are determined.

Basic work conditions: steel grade, heat number/row number, slab length, slab width, slab weight, finished coil thickness, finished coil width, total in-furnace time, billet temperature before charging, and target billet tapping temperature.

Operational data: residence time in preheating section, residence time in heating section, residence time in soaking section; air flow in preheating section, gas flow in preheating section; air flow in heating section, gas flow in heating section; air flow in soaking section, gas flow in soaking section.

Optimization objective: to shorten the time of the air-fuel ratio of the rolling heating furnace being unqualified as much as possible.

Constraints: The billet tapping temperature and temperature uniformity (head, middle and tail temperatures) meet the configuration values.

In step S20, a subdivision rule is set for each data dimension of the basic work conditions.

Upper and lower step limits are set for the steel grade and the heat number/row number.

The steps of slab length, slab width, finished coil thickness, and finished coil width are all 1mm.

The step value of slab weight is lt.

The step value of the total in-furnace time is ls.

The step values of the billet temperature before charging and the target billet tapping temperature are 1°C.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (steel grade, heat number/row number, slab length, slab width, slab weight, finished coil thickness, finished coil width, total in-furnace time, billet temperature before charging, and target billet tapping temperature), operational data (residence time in preheating section, residence time in heating section, residence time in soaking section; air flow in preheating section, gas flow in preheating section; air flow in heating section, gas flow in heating section; air flow in soaking section, gas flow in soaking section) and evaluation data (the time of the air-fuel ratio of the rolling heating furnace being unqualified) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The residence time in preheating section, the residence time in heating section, the residence time in soaking section; the air flow in preheating section, the gas flow in preheating section; the air flow in heating section, the gas flow in heating section; the air flow in soaking section, and the gas flow in soaking section in the knowledge record are used as recommended suggestions.

In step S60, the recommended suggestions can be offered to workers for operation, or can be directly controlled by the DCS system of the device.

In S70, the process goes to step S30.

Example 48

Operation control for denitrification device

The process flow of this embodiment:
In step S10, three data dimensions are determined.

Basic work conditions: boiler load, the NOx concentration of raw flue gas, raw flue gas flow, raw flue gas temperature, and the O2 content of raw flue gas.

Operational data: ammonia injection amount in the main pipe and ammonia injection amount in the branch pipe.

Optimization objective: to achieve lower ammonia consumption for removing a unit of NOx.

Constraints: Nox concentration of net flue gas meets national emission standards, and ammonia escape is lower than a set value.

In step S20, a subdivision rule is set for each data dimension of the basic work conditions.

The step value of boiler load is 50t/h.

The NOx concentration of raw flue gas is 10g/m3.

The step value of the raw flue gas flow is 1t/h.

The step value of the raw flue gas temperature is 1°C.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (boiler load, the NOx concentration of raw flue gas, raw flue gas flow, raw flue gas temperature, and the O2 content of raw flue gas), operational data (ammonia injection amount in the main pipe and ammonia injection amount in the branch pipe), and evaluation data (unit ammonia consumption) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The ammonia injection amount in the main pipe and the ammonia injection amount in the branch pipe in the knowledge record are used as recommended suggestions.

In step S60, the recommended suggestions can be offered to workers for operation, or can be directly controlled by the DCS system of the device.

In S70, the process goes to step S30.

Example 49

Control for reheated steam temperature of steam turbine

The process flow of this embodiment:
In step S10, three data dimensions are determined.
Basic work conditions: outlet temperature of a high-pressure cylinder of the steam turbine, inlet temperature of reheated steam, outlet pressure of reheated steam, flue gas flow on the reheater side, flue gas temperature on the reheater side, and steam turbine exhaust humidity.
Operational data: control valves at outlets of the steam turbine, negative pressure at the outlet of the high-pressure cylinder of the steam turbine, pressure increase at the outlet of the high-pressure cylinder of the steam turbine, and the amount of desuperheating water in the reheater.
Optimization objective: to achieve higher work done per unit heat.
Constraints: the reheated steam temperature of the turbine does not deviate from the rated value.
In step S20, a subdivision rule is set for each data dimension of the basic work conditions.
The step value of the reheated steam outlet pressure is 0.1KPa.
The steps of the outlet temperature of the high-pressure cylinder of the steam turbine, the inlet temperature of reheated steam, and the flue gas temperature on the reheater side are 1°C.
In step S30, the basic work condition data and the operational data are monitored in a real-time and online manner, and an operation record collection plan, including collection time, is formulated once a change is found.
In step S40, operation record collection is carried out.
If there is currently an operation record collection plan and the collection time is up, the constraints are checked. If all the constraints are met, the basic work condition data (outlet temperature of a high-pressure cylinder of the steam turbine, inlet temperature of reheated steam, outlet pressure of reheated steam, flue gas flow on the reheater side, flue gas temperature on the reheater side, and steam turbine exhaust humidity), operational data (control valves at outlets of the steam turbine, negative pressure at the outlet of the high-pressure cylinder of the steam turbine, pressure increase at the outlet of the high-pressure cylinder of the steam turbine, and the amount of desuperheating water in the reheater), and evaluation data (unit heat) are added to the knowledge base as a complete knowledge record.
In step S50, intelligent decision-making is performed.
The current basic work conditions are obtained and the knowledge base is searched for the corresponding subdivided work conditions. For knowledge records that meet the constraints, records corresponding to the optimal evaluation data are selected as the basis for generating operation suggestions. The control valves at outlets of the steam turbine, negative pressure at the outlet of the high-pressure cylinder of the steam turbine, pressure increase at the outlet of the high-pressure cylinder of the steam turbine, and the amount of desuperheating water in the reheater in the knowledge record are used as recommended suggestions.
In step S60, the recommended suggestions can be offered to workers for operation, or can be directly controlled by the DCS system of the device.
In S70, the process goes to step S30.

Example 50

Optimal operation scheme of wire laying in steel rolling

When the rolling stock comes out of a roll and enters the laying head through a pinch roll, the driving force for the advancement of the rolling stock depends on the feeding force of the pinch roll and the centrifugal force of the spinning disc rotation. The wire is extruded by the laying head so that the steel is processed into a fixed diameter and circle diameter. The high-speed moving linear wire is laid into a coil, thus obtaining a coil with stable coil shape and uniform spacing. The laying head is driven by a motor to change the direction of the bevel gear, and then is decelerated by the large and small gears to drive a spiral tube and a laying disc to rotate. The wire enters the helical tube through a hollow shaft, forms wire loops through the spinning disc and the wire loops are pushed forward one by one and toppled.
The process flow of this embodiment:
In step S10, three data dimensions are determined.
Basic work conditions: steel grade, wire diameter, and inlet temperature of wire laying head.
Operational data: horizontal acceleration of the laying head, vertical acceleration of the laying head, and push speed of the pinch roll.
Optimization objective: to achieve better diameter uniformity of the coil from the spinning coil.
Constraints: the quality and size of the wire meet the configuration values.
In step S20, a subdivision rule is set for each data dimension of the basic work conditions.

Upper and lower step limits are set for the steel grade.

The step value of the wire diameter is 1mm.

The step value of the inlet temperature of the wire laying head is 1°C.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (steel grade, wire diameter, and inlet temperature of wire laying head), operational data (horizontal acceleration of the laying head, vertical acceleration of the laying head, and push speed of the pinch roll) and evaluation data (diameter uniformity of the coil from the spinning coil) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The horizontal acceleration of the laying head, the vertical acceleration of the laying head, and the push speed of the pinch roll in the knowledge record are used as recommended suggestions.

In step S60, the recommended suggestions can be offered to workers for operation, or can be directly controlled by the DCS system of the device.

In S70, the process goes to step S30.

Example 51

Energy saving control for waste heat steam turbine

The process flow of this embodiment:
In step S10, three data dimensions are determined.

Basic work conditions: inlet steam pressure, inlet steam temperature, inlet steam flow rate, cooling rate, extraction steam pressure, extraction steam temperature, leakage loss, regulating-stage steam chamber pressure, steam turbine speed, and steam turbine amplitude.

Operational data: valve opening, temperature adjustment of cooling water, and extraction steam pressure valve adjustment.

Optimization objective: to achieve the optimal steam consumption rate of the steam turbine.

Constraints: the power generation meets the demand and the steam meets the user's demand.

In step S20, a subdivision rule is set for each data dimension of the basic work conditions.

The step values of inlet steam pressure, extraction steam pressure and regulating-stage steam chamber pressure are 0.1KPa.

The step value of the steam turbine speed is 10r/min.

The step value of the turbine amplitude is 100HZ.

The step value of the inlet steam flow is 1t/h.

The step values of inlet steam temperature and extraction steam temperature are 1°C.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (inlet steam pressure, inlet steam temperature, inlet steam flow rate, cooling rate, extraction steam pressure, extraction steam temperature, leakage loss, regulating-stage steam chamber pressure, steam turbine speed, and steam turbine amplitude), operational data (valve opening, temperature adjustment of cooling water, and extraction steam pressure valve adjustment) and evaluation data (steam consumption rate) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The valve opening, the temperature adjustment of cooling water, and the extraction steam pressure valve adjustment in the knowledge record are used as recommended suggestions.

In step S60, the recommended suggestions can be offered to workers for operation, or can be directly controlled by the DCS system of the device.

In S70, the process goes to step S30.

Example 52

Control for waste heat boiler

The process flow of this embodiment:
In step S10, three data dimensions are determined.
Basic work conditions: ambient temperature, inlet flue gas temperature, inlet flue gas pressure, hot-end temperature difference, node temperature difference, approach point temperature difference, inlet water temperature of feed pump, superheated steam pressure, superheated steam temperature, outlet flue gas temperature, drum water level, and drum pressure.
Operational data: the opening of inlet flue gas valve and the valve opening of high-temperature heater.
Optimization objective: to achieve the optimal utilization of waste heat of waste heat boiler.
Constraints: to ensure the safe operation of the waste heat boiler.
In step S20, a subdivision rule is set for each data dimension of the basic work conditions.
The step value of the drum pressure is 0.1KPa.
The step value of the drum water level is 0.5mm.
The step values of ambient temperature, inlet flue gas temperature, hot-end temperature difference, node temperature difference, approach point temperature difference, inlet water temperature of feed pump, superheated steam pressure, superheated steam temperature, outlet flue gas temperature, drum water level, and drum pressure are 1°C.
In step S30, the basic work condition data and the operational data are monitored in a real-time and online manner, and an operation record collection plan, including collection time, is formulated once a change is found.
In step S40, operation record collection is carried out.
If there is currently an operation record collection plan and the collection time is up, the constraints are checked. If all the constraints are met, the basic work condition data (ambient temperature, inlet flue gas temperature, inlet flue gas pressure, hot-end temperature difference, node temperature difference, approach point temperature difference, inlet water temperature of feed pump, superheated steam pressure, superheated steam temperature, outlet flue gas temperature, drum water level, and drum pressure), operational data (the opening of inlet flue gas valve and the valve opening of high-temperature heater) and evaluation data (utilization of waste heat) are added to the knowledge base as a complete knowledge record.
In step S50, intelligent decision-making is performed.
The current basic work conditions are obtained and the knowledge base is searched for the corresponding subdivided work conditions. For knowledge records that meet the constraints, records corresponding to the optimal evaluation data are selected as the basis for generating operation suggestions. The opening of inlet flue gas valve and the valve opening of high-temperature heater in the knowledge record are used as recommended suggestions.
In step S60, the recommended suggestions can be offered to workers for operation, or can be directly controlled by the DCS system of the device.
In S70, the process goes to step S30.

Example 53

Air volume control

The process flow of this embodiment:
In step S10, three data dimensions are determined.
Basic work conditions: air supply volume, blower power, negative pressure in the furnace, boiler body resistance, economizer resistance, preheater resistance, dust collector resistance, desulfurization device resistance, chimney resistance, and flue resistance.
Operational data: power of each induced draft fan, air volume of each induced draft fan, and air pressure of each induced draft fan.
Optimization objective: to achieve lower total energy consumption of induced draft fans.
Constraints: the normal operation of the boiler unit is ensured.
In step S20, a subdivision rule is set for each data dimension of the basic work conditions.
The step value of the air supply volume is 50m/s.
The step values of negative pressure in the furnace, boiler body resistance, economizer resistance, preheater resistance, dust collector resistance, desulfurization device resistance, chimney resistance and flue resistance are 0.1KPa.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (air supply volume, blower power, negative pressure in the furnace, boiler body resistance, economizer resistance, preheater resistance, dust collector resistance, desulfurization device resistance, chimney resistance, and flue resistance), operational data (power of each induced draft fan, air volume of each induced draft fan, and air pressure of each induced draft fan) and evaluation data (the total energy consumption of induced draft fans) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The power of each induced draft fan, the air volume of each induced draft fan, and the air pressure of each induced draft fan in the knowledge record are used as recommended suggestions.

In step S60, the recommended suggestions can be offered to workers for operation, or can be directly controlled by the DCS system of the device.

In S70, the process goes to step S30.

Example 54

Optimal operation scheme of pump room control in a power plant

The pump room manager can remotely monitor the water level of a water tank in a pump station or inlet pressure, the working status of a booster pump unit, outlet flow, and outlet pressure in a monitoring center. Through dynamic adjustment and control of the start and stop of the booster pump unit, the unit power consumption of the pump room can be reduced on the premise of meeting all the demands on production water. The objective of this scenario is to reduce the unit power consumption of the pump room on the premise of meeting all the demands on production water.

The process flow of this embodiment:

In step S10, three data dimensions are determined.

Basic work conditions: the temperature and liquid level of water tank, ambient temperature, cooling column, cooler valve opening, and the temperature, flow and pressure of return water.

Operational data: water pump switch, frequency of frequency conversion pump, valve opening, cooling column switch, frequency of cooling column, and evaporative cooler switch.

Optimization objective: to reduce the unit power consumption of the pump room.

Constraints: the water supply temperature, pressure, and flow of the blast furnace reach the configuration values.

In step S20, a subdivision rule is set for each data dimension of the basic work conditions.

Upper and lower step limits are set for the temperature and liquid level of water tank, ambient temperature, cooling column, cooler valve opening, and the temperature, flow and pressure of return water.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the temperature and liquid level of water tank, ambient temperature, cooling column, cooler valve opening, and the temperature, flow and pressure of return water), operational data (water pump switch, frequency of frequency conversion pump, valve opening, cooling column switch, frequency of cooling column, and evaporative cooler switch) and evaluation data (reduction in unit power consumption of a pump room) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The water pump switch, the frequency of frequency conversion pump, the valve opening, the cooling column switch, the frequency of cooling column, and the evaporative cooler switch in the knowledge record are used as recommended suggestions.

In step S60, the recommended suggestions can be offered to workers for operation, or can be directly controlled by the DCS system of the device.

In S70, the process goes to step S30.

Example 55

Control for roasting operation

In the roasting process of zinc hydrometallurgy, the concentrate composition, particle fineness, loose ratio, particle temperature and moisture content of each batch of raw materials are different. It is required to adjust the corresponding air blowing volume, oxygen blowing volume, and feeding volume, so that air or oxygen-enriched material is blown through the solid charge layer from bottom to top. In this way, the solid particles are separated from each other, and by constant stirring, zinc sulfide is effectively converted into zinc oxide and zinc sulfate, impurities such as lead and cadmium are removed, and the rate of soluble zinc is improved.

The process flow of this embodiment:

In step S10, three data dimensions are determined.

Basic work conditions: concentrate composition, particle fineness, loose ratio, particle temperature, and moisture content.

Operational data: air blowing volume, oxygen blowing volume, and feeding volume.

Optimization objective: to achieve a higher rate of soluble zinc in the roasted product.

Constraints: the output per unit time is ensured.

In step S20, a subdivision rule is set for each data dimension of the basic work conditions.

The isometric classification method is carried out in this example.

The step value of concentrate composition is 0.1%.

The step value of particle fineness is 1um.

The step value of particle temperature is 1°C.

The step value of the loose ratio is 1%.

The step value of moisture content is 0.1%.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (concentrate composition, particle fineness, loose ratio, particle temperature, and moisture content), operational data (air blowing volume, oxygen blowing volume, and feeding volume) and evaluation data (the rate of soluble zinc) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The air blowing volume, oxygen blowing volume, and feeding volume in the knowledge record are used as recommended data and support for operation settings.

In step S60, the recommended suggestions can be offered to workers for operation, or can be directly controlled by an industrial control system.

In S70, the process goes to step S30.

Example 56

Control for leaching operation in zinc hydrometallurgy

In the leaching process of zinc hydrometallurgy, the zinc-containing materials (mostly including zinc leaching residues, zinc sulfide, zinc calcine, zinc fume, zinc oxide concentrate, and the like) are poured into the solution. The stirring speed of the stirring cell, sulfuric acid dosage, solution temperature and leaching time are adjusted in the leaching process according to the difference in the composition of zinc calcine, the dosage of zinc calcine, and the concentration of sulfuric acid. In this way, the concentration of zinc ions in the leaching solution is increased, and insoluble solids form residues. The mixed pulp obtained by leaching is then concentrated and filtered to separate the solution from the residues.

The process flow of this embodiment:

In step S10, three data dimensions are determined.

Basic work conditions: zinc calcine composition, zinc calcine dosage, and sulfuric acid concentration.

Operational data: stirring speed of stirring tank, sulfuric acid dosage, solution temperature, and leaching time.

Optimization objective: to achieve a higher concentration of zinc ions in the leaching solution.

Constraints: none.

In step S20, a subdivision rule is set for each data dimension of the basic work conditions.

The isometric classification method is carried out in this example.

The step value of zinc calcine composition is 0.1%.

The step value of zinc calcine dosage is 0.01t.

The step value of sulfuric acid concentration is 1g/L.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (zinc calcine composition, zinc calcine dosage, and sulfuric acid concentration), operational data (stirring speed of stirring tank, sulfuric acid dosage, solution temperature, and leaching time) and evaluation data (the concentration of zinc ions) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The stirring speed of stirring tank, sulfuric acid dosage, solution temperature, and leaching time in the knowledge record are used as recommended data and support for operation settings.

In step S60, the recommended suggestions can be offered to workers for operation, or can be directly controlled by an industrial control system.

In S70, the process goes to step S30.

Example 57

Control for purification operation in zinc hydrometallurgy

In the purification process of zinc hydrometallurgy, the replacement temperature, replacement time and zinc powder dosage are adjusted during the purification process according to the difference in zinc liquid composition, zinc liquid flow and zinc liquid temperature. While reducing the zinc powder consumption, the contents of impurities such as copper, iron, cobalt, iron, arsenic, antimony and the like in the neutral supernatant obtained after leaching and filtration are removed to below the limits specified by the process, so as to improve the purity of electrolyte so that the requirements for the zinc liquid can be met during electrolytic deposition.

The process flow of this embodiment:

In step S10, three data dimensions are determined.

Basic work conditions: zinc liquid composition, zinc liquid flow, and zinc liquid temperature.

Operational data: replacement temperature, replacement time, and zinc powder consumption.

Optimization objective: to achieve lower zinc powder consumption.

Constraints: zinc liquid (the contents of impurities such as copper, iron, cobalt, arsenic, antimony, and the like) is qualified

In step S20, a subdivision rule is set for each data dimension of the basic work conditions.

The isometric classification method is carried out in this example.

The step value of zinc liquid composition is 0.1%.

The step value of zinc liquid flow is 1L/min.

The step value of zinc liquid temperature is 1°C.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (zinc liquid composition, zinc liquid flow, and zinc liquid temperature), operational data (replacement temperature, replacement time, and zinc powder consumption) and evaluation data (zinc powder consumption) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The replacement temperature, replacement time, and zinc powder consumption in the knowledge record are used as recommended data and support for operation settings.

In step S60, the recommended suggestions can be offered to workers for operation, or can be directly controlled by an industrial control system.

In S70, the process goes to step S30.

Example 58

Control for electrowinning operation in zinc hydrometallurgy

In the electrowinning process of zinc hydrometallurgy, the temperature, PH and pressure of electrolyte, the charging speed of zinc material, stirring speed, current density and cell voltage are adjusted during the electrowinning process according to the difference in zinc sulfate concentration, zinc sulfate temperature and the number of electrolytic plates. While reducing the power consumption of electrowinning, electrowinning is carried out by using aqueous solution of zinc sulfate containing sulfuric acid as electrolyte, an alloy lead plate containing 0.5-1% of silver as anode, and a rolled aluminum plate as cathode. Zinc is precipitated at the cathode and oxygen is released at the anode.

The process flow of this embodiment:
In step S10, three data dimensions are determined.

Basic work conditions: zinc sulfate concentration, zinc sulfate temperature, and number of electrolytic plates.

Operational data: the temperature, PH and pressure of electrolyte, charging speed of zinc material, stirring speed, current density, and cell voltage.

Optimization objective: to achieve lower power consumption of the electrowinning process.

Constraints: the purity of the finished zinc is qualified.

In step S20, a subdivision rule is set for each data dimension of the basic work conditions.

The isometric classification method is carried out in this example.

The step value of zinc sulfate concentration is 1g/L.

The step value of the number of electrolytic plates is 1.

The step value of zinc sulfate temperature is 1°C.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (zinc sulfate concentration, zinc sulfate temperature, and number of electrolytic plates), operational data (the temperature, PH and pressure of electrolyte, charging speed of zinc material, stirring speed, current density, and cell voltage) and evaluation data (the power consumption of the electrowinning process) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The temperature, PH and pressure of electrolyte, charging speed of zinc material, stirring speed, current density, and cell voltage in the knowledge record are used as recommended data and support for operation settings.

In step S60, the recommended suggestions can be offered to workers for operation, or can be directly controlled by an industrial control system.

In S70, the process goes to step S30.

Example 59

Optimization of refining operation of anode furnace

In the operation process of the anode furnace in the copper smelting process, the fire refining process of the anode furnace includes: feeding → redox → copper discharge → heat preservation. The whole process needs to use a certain flow of fuel (heavy oil) for heating, and different processes need to hold different temperatures, and the temperature depends on the combustion of fuel and oxygen.

The process flow of this embodiment:
In step S10, three data dimensions are determined.

Basic work conditions: temperature after first round of feeding, blister copper composition, copper amount for the first round, feeding time for the first round, pre-oxidation time, temperature after second round of feeding, copper amount for the second round, temperature before oxidation, and opening sample after oxidation, oxidation time (including the time of slag discharging), finish temperature of oxidation, amount of discharged slag, pause time for the requirement of desulfurization, and copper sample before reduction.

Operational data: heavy oil flow in feeding stage, heavy oil flow in oxidation stage, heavy oil flow in reduction stage, heavy oil flow in copper discharge stage, and heavy oil flow in holding stage.

Optimization objective: to achieve lower unit consumption of heavy oil.

Constraints: the copper content in slag, the temperature in the feeding stage, the temperature in the oxidation stage, the temperature in the reduction stage, the temperature in the copper extraction stage, and the temperature in the holding stage reach the configuration values.

In step S20, a subdivision rule is set for each data dimension of the basic work conditions.

The isometric classification method is carried out in this example.

The step values of the temperature after first round of feeding, the temperature after second round of feeding, the temperature before oxidation and the finish temperature of oxidation are 0.01 %.

The step value of blister copper composition is 0.1%.

The step value of the copper amount for the first round is 0.1t.

The step values of the feeding time for the first round, the pre-oxidation time, the oxidation time (including the time of slag discharging) and the pause time for the requirement of desulfurization are 1min.

Sample after oxidation and copper sample before reduction are divided into: flat copper, worm copper, flat copper (slightly concave), and volcano worm copper.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (temperature after first round of feeding, blister copper composition, copper amount for the first round, feeding time for the first round, pre-oxidation time, temperature after second round of feeding, copper amount for the second round, temperature before oxidation, and opening sample after oxidation, oxidation time (including the time of slag discharging), finish temperature of oxidation, amount of discharged slag, pause time for the requirement of desulfurization, and copper sample before reduction), operational data (heavy oil flow in feeding stage, heavy oil flow in oxidation stage, heavy oil flow in reduction stage, heavy oil flow in copper discharge stage, and heavy oil flow in holding stage) and evaluation data (unit heavy oil consumption) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The heavy oil flow in feeding stage, the heavy oil flow in oxidation stage, the heavy oil flow in reduction stage, the heavy oil flow in copper discharge stage, and the heavy oil flow in holding stage in the knowledge record are used as recommended data and support for operation settings.

In step S60, the recommended suggestions can be offered to workers for operation, or can be directly controlled by an industrial control system.

In S70, the process goes to step S30.

Example 60

Optimization of converter operation in copper smelting process

In the converter operation of copper smelting process, the steam drying, flash smelting, P-S converter blowing, and rotary anode furnace refining of copper concentrate is adopted. The copper concentrate is treated by flash smelting technology to produce high-grade matte. The matte of the flash furnace is discharged into a matte ladle through a launder and transported to the converter by two 85-ton cranes. The converter adopts 3 P-S converters with a capacity of 260 tons to produce blister copper with a copper content of 98% or above. The blister copper is further refined in an anode furnace and finally cast into anode plates by an M18 double disc caster. The flash slag and converter slag are transported to a slag flotation workshop for treatment through the slag ladle, and the resulting slag concentrate is returned back in the flash furnace and smelted therein. In the converter process, the raw material is matte, and the matte is oxidized to blister copper through oxygen blowing, feeding and other operations. Different operations in the blowing process (oxygen blowing and feeding) will cause the temperature of the blowing process to fluctuate. However, the converter blowing process is very sensitive to the temperature stability, which is of great significance to the smelting time.

The process flow of this embodiment:

In step S10, three data dimensions are determined.

Basic work conditions: the amount of matte, matte composition, and matte temperature.

Operational data: quartz dosage, solid beryllium dosage, the dosage of scrap copper and other auxiliary materials, air supply volume, oxygen consumption, and blowing time.

Optimization objective: to reduce the overall smelting time of the converter.

Constraints: The blister copper composition meets the quality standard requirements.

In step S20, a subdivision rule is set for each data dimension of the basic work conditions.

The isometric classification method is carried out in this example.

The step value of the matte composition is 0.01%.

The step value of the amount of matte is 0.1t.

The step value of matte temperature is 1°C.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (the amount of matte, matte composition, and matte temperature), operational data (quartz dosage, solid beryllium dosage, the dosage of scrap copper and other auxiliary materials, air supply volume, oxygen consumption, and blowing time) and evaluation data (smelting time) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The quartz dosage, the solid beryllium dosage, the dosage of scrap copper and other auxiliary materials, the air supply volume, the oxygen consumption, and the blowing time in the knowledge record are used as recommended data and support for operation settings.

In step S60, the recommended suggestions can be offered to workers for operation, or can be directly controlled by an industrial control system.

In S70, the process goes to step S30.

Example 61

Control for electrorefining operation in copper smelting

In the production process of electrorefining in copper smelting, copper electrorefining is the process of placing the anode plate and the cathode plate in the electrolyte and then turning on direct current. In order to ensure the good growth of copper on the cathode plate, corresponding additives need to be added to the electrolyte. The additives are mainly thiourea and lime glue, and different additive ratios have different effects on the copper adhesion on the cathode plate. In copper electrorefining, through the collection of electrorefining-related historical data (anode composition, chemical composition of electrolyte, electrolyte temperature, circulation speed of electrolyte, current density, ratio of additives such as lime glue, thiourea, hydrochloric acid, and dosage of additives), an electrorefining operation experience database is formed. By finding the operation with the highest proportion of A-level cathode plate under the same work conditions in history (for controlling the ratio and dosage of additives), the quality of electrolytic copper is improved under the premise of reasonable power consumption.

The process flow of this embodiment:

In step S10, three data dimensions are determined.

Basic work conditions: anode composition, chemical composition of electrolyte, electrolyte temperature, circulation speed of electrolyte, and current density.

Operational data: the ratio of additives such as lime glue, thiourea, and hydrochloric acid, and the dosage of additives.

Optimization objective: to improve the quality of electrolytic copper (i.e., highest proportion of A-level cathode plate).

Constraints: the power consumption is less than the configuration value.

In step S20, a subdivision rule is set for each data dimension of the basic work conditions.

The isometric classification method is carried out in this example.

The step values of anode composition and the chemical composition of electrolyte are 0.1%.

The step value of the circulation speed of electrolyte is 0.1L/min.

The step value of electrolyte temperature is 1°C.

The step value of the current density is $0.1A/m^2$.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked.

If all the constraints are met, the basic work condition data (anode composition, chemical composition of electrolyte, electrolyte temperature, circulation speed of electrolyte, and current density), operational data (the ratio of additives such as lime glue, thiourea, and hydrochloric acid, and the dosage of additives) and evaluation data (the quality of electrolytic copper (i.e., highest proportion of A-level cathode plate)) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The ratio of additives such as lime glue, thiourea, and hydrochloric acid, and the dosage of additives in the knowledge record are used as recommended data and support for operation settings.

In step S60, the recommended suggestions can be offered to workers for operation, or can be directly controlled by an industrial control system.

In S70, the process goes to step S30.

Example 62

Operation optimization of acid conversion process

The acid conversion process mainly refers to sulfur dioxide flue gas purification (including cooling, dust removal, and fog removal). Drying is carried out. Sulfur dioxide flue gas is converted and then absorbed into sulfuric acid. The desulfurization treatment of exhaust gas is controlled by frequency conversion of a hydrogen peroxide metering pump. By interlocking the frequency conversion with the concentration of SO2 at the outlet, the dosage of hydrogen peroxide added into the column is automatically controlled, so that the concentration is controlled at 0.05 to 0.1%.

The process flow of this embodiment:
In step S10, three data dimensions are determined.

Basic work conditions: inlet air pressure, inlet flue gas flow, inlet O2 concentration, inlet SO2 concentration, inlet temperature, 2602 valve opening, inlet temperature t1 of 1st-layer catalyst, outlet temperature t1 of 1st-layer catalyst, inlet temperature t1 of 2nd-layer catalyst, outlet temperature t1 of 2nd-layer catalyst, inlet temperature t1 of 3rd-layer catalyst, outlet temperature t1 of 3rd-layer catalyst, inlet temperature t1 of 4th-layer catalyst, outlet temperature t1 of 4th-layer catalyst, pre-transform inlet temperature, pre-transform outlet temperature, inlet and outlet temperature t1 of 1th-layer converter, inlet and outlet temperature t1 of 2nd-layer converter, inlet and outlet temperature t1 of 3rd-layer converter, inlet and outlet temperature t1 of 4th-layer converter, inlet temperature t1 of first-stage absorber, and outlet temperature t1 of first-stage absorber.

Operational data: 2604 valve opening, 2607 valve opening, 2610 valve opening, 2617 valve opening, and 2602 valve opening.

Optimization objective: to improve the conversion rate of sulfur dioxide.

Constraints: the changes in inlet temperature t2 of 1st-layer catalyst, outlet temperature t2 of 1st-layer catalyst, inlet temperature t2 of 2nd-layer catalyst, outlet temperature t2 of 2nd-layer catalyst, inlet temperature t2 of 3rd-layer catalyst, outlet temperature t2 of 3rd-layer catalyst, inlet temperature t2 of 4th-layer catalyst, outlet temperature t2 of 4th-layer catalyst, inlet and outlet temperature t2 of 1th-layer converter, and inlet and outlet temperature t2 of 2nd-layer converter within 60 seconds after operation do not go beyond specified configuration value ranges.

In step S20, a subdivision rule is set for each data dimension of the basic work conditions.

The isometric classification method is carried out in this example.

The step values of inlet temperature, inlet temperature t1 of 1st-layer catalyst, outlet temperature t1 of 1st-layer catalyst, inlet temperature t1 of 2nd-layer catalyst, outlet temperature t1 of 2nd-layer catalyst, inlet temperature t1 of 3rd-layer catalyst, outlet temperature t1 of 3rd-layer catalyst, inlet temperature t1 of 4th-layer catalyst, outlet temperature t1 of 4th-layer catalyst, pre-transform inlet temperature, pre-transform outlet temperature, inlet and outlet temperature t1 of 1th-layer converter, inlet and outlet temperature t1 of 2nd-layer converter, inlet and outlet temperature t1 of 3rd-layer converter, inlet and outlet temperature t1 of 4th-layer converter, inlet temperature t1 of first-stage absorber, and outlet temperature t1 of first-stage absorber are 1°C.

The step values of inlet O2 concentration and inlet SO2 concentration are 0.1%.

The step value of inlet air pressure is 1KPa.

The step value of inlet flue gas flow is NM3/h.

The step value of 2602 Valve opening is 1%.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (inlet air pressure, inlet flue gas flow, inlet O2 concentration, inlet SO2 concentration, inlet temperature, 2602 valve opening, inlet temperature t1 of 1st-layer catalyst, outlet temperature t1 of 1st-layer catalyst, inlet temperature t1 of 2nd-layer catalyst, outlet temperature t1 of 2nd-layer catalyst, inlet temperature t1 of 3rd-layer catalyst, outlet temperature t1 of 3rd-layer catalyst, inlet temperature t1 of 4th-layer catalyst, outlet temperature t1 of 4th-layer catalyst, pre-transform inlet temperature, pre-transform outlet temperature, inlet and outlet temperature t1 of 1th-layer converter, inlet and outlet temperature t1 of 2nd-layer converter, inlet and outlet temperature t1 of 3rd-layer converter, inlet and outlet temperature t1 of 4th-layer converter, inlet temperature t1 of first-stage absorber, and outlet temperature t1 of first-stage absorber), operational data (2604 valve opening, 2607 valve opening, 2610 valve opening, 2617 valve opening, and 2602 valve opening) and evaluation data (SO2 concentration at the exhaust gas desulfurization inlet) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The 2604 valve opening, the 2607 valve opening, the 2610 valve opening, the 2617 valve opening, and the 2602 valve opening in the knowledge record are used as recommended data and support for operation settings.

In step S60, the recommended suggestions can be offered to workers for operation, or can be directly controlled by an industrial control system.

In S70, the process goes to step S30.

Example 63

Milling control

The process flow of this embodiment:
In step S10, three data dimensions are determined.

Basic work conditions: coal type, rated value of coal feeder, current coal feed, current reserve of pulverized coal silo, coal level of coal mill, primary air temperature, inlet pressure of primary air, differential pressure between seal air and primary air, outlet pressure of separator, air-pulverized coal mixture temperature of separator, differential pressure between primary air inlet and separator outlet, and rotation speed of coarse pulverized coal separator.

Operational data: instantaneous coal feed, primary hot air valve opening, primary cold air valve opening, sealing blower valve opening, grinding disc speed adjustment, and frequency of coarse pulverized coal separator.

Optimization objective: to achieve lower unit power consumption of the coal mill for producing pulverized coal.

Constraints: the quality of pulverized coal meets combustion requirements of the boiler.

In step S20, a subdivision rule is set for each data dimension of the basic work conditions.

The step values of primary air inlet pressure, differential pressure between seal air and primary air, outlet pressure of separator, and differential pressure between primary air inlet and separator outlet are 0.1KPa.

The step value of rotation speed of coarse pulverized coal separator is 10r/min;

The step values of primary air temperature and air-pulverized coal mixture temperature of separator are 1°C.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (coal type, rated value of coal feeder, current coal feed, current reserve of pulverized coal silo, coal level of coal mill, primary air temperature, inlet pressure of primary air, differential pressure between seal air and primary air, outlet pressure of separator, air-pulverized coal mixture temperature of separator, differential pressure between primary air inlet and separator outlet, and speed of coarse pulverized coal separator), operational data (instantaneous coal feed, primary hot air valve opening, primary cold air valve opening, sealing blower valve opening, grinding disc speed adjustment, and frequency of coarse pulverized coal separator) and evaluation data (unit power consumption of pulverized coal production) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The instantaneous coal feed, the primary hot air valve opening, the primary cold air valve opening, the sealing blower valve opening, the grinding disc speed adjustment, and the frequency of coarse pulverized coal separator in the knowledge record are used as recommended suggestions.

In step S60, the recommended suggestions can be offered to workers for operation, or can be directly controlled by the DCS system of the device.

In S70, the process goes to step S30.

Example 64

Control for coal blending

The process flow of this embodiment:

In step S10, three data dimensions are determined.

Basic work conditions: basic information of purchased coal (coal source, unit price, variety, as-received, volatiles, moisture, ash, sulfur, and calorific value), and basic information (type, unit price, variety) of additives.

Operational data: adjustments for the amounts of different coal types and for the amount of each additive.

Optimization objective: to achieve lower fuel cost.

Constraints: the calorific value of coal meets the combustion requirements of the boiler.

In step S20, a subdivision rule is set for each data dimension of the basic work conditions.

The data dimensions of the basic work conditions are divided according to the type of coal and additives.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (basic information of purchased coal (coal source, unit price, variety, as-received, volatiles, moisture, ash, sulfur, and calorific value), and basic information (type, unit price, variety) of additives, operational data (adjustments for the amounts of different coal types and for the amount of each additive) and evaluation data (fuel cost) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The adjustments for the amounts of different coal types and for the amount of each additive in the knowledge record are used as recommended data and support for settings of air conditioning.

In step S60, the recommended suggestions can be offered to workers for operation, or can be directly controlled by the air-conditioning system.

In S70, the process goes to step S30.

Example 65

Cement dedusting

In the process of cement production, a large amount of dust will be generated and the dust needs to be handled by a bag dust removal device. In the process of dust removal, the unit power consumption of dust removal is effectively reduced mainly by adjusting the blower valve opening, speed and motor current.

The process flow of this embodiment:

In step S10, three data dimensions are determined.

Basic work conditions: dust removal volume (flue gas flow * concentration), temperature in dust removal bag, and operating pressure difference of dust removal bag.

Operational data: blower valve opening, filter wind speed of dust collector, pulse time of pulse valve, and pulse cycle of pulse valve.

Optimization objective: to reduce unit power consumption of dust removal.

Constraints: dust emissions meet national standards.

In step S20, a subdivision rule is set for each data dimension of the basic work conditions.

The isometric classification method is carried out in this example to set the upper and lower limits of the work conditions.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked.

If all the constraints are met, the basic work condition data (dust removal volume (flue gas flow * concentration), temperature in dust removal bag, and operating pressure difference of dust removal bag), operational data (blower valve opening, filter wind speed of dust collector, pulse time of pulse valve, and pulse cycle of pulse valve) and evaluation data (unit power consumption of dust removal) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The blower valve opening, the filter wind speed of dust collector, the pulse time of pulse valve, and the pulse cycle of pulse valve in the knowledge record are used as recommended data and support for settings of air conditioning.

In step S60, the recommended suggestions can be offered to workers for operation, or can be directly controlled by a central control system.

In S70, the process goes to step S30.

Example 66

Cement milling

Cement milling refers to thoroughly milling the clinker to a suitable particle size (represented by fineness, specific surface area, and the like) to form a certain particle gradation. The milled clinker is unloaded from the tail end of the mill, and then delivered to a powder separator through a mill hoist. By adjusting the number of steel balls, the total area of the steel balls can be increased, the milling effect of the steel balls on the material can be improved, and the unit power consumption for the product is reduced.

The process flow of this embodiment:

In step S10, three data dimensions are determined.

Basic work conditions: feed amount, current of mill hoist, material level of weighing bin, and particle gradation.

Operational data: filling rate of ball mill, wind speed in ball mill, rotation speed of powder separator, and wind speed of exhaust blower.

Optimization objective: to achieve the lowest unit power consumption of the mill.

Constraints: particle fineness.

In step S20, a subdivision rule is set for each data dimension of the basic work conditions.

The isometric classification method is carried out in this example to set the upper and lower limits of the work conditions.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (feed amount, current of mill hoist, material level of weighing bin, and particle gradation), operational data (filling rate of ball mill, wind speed in ball mill, rotation speed of powder separator, and wind speed of exhaust blower) and evaluation data (unit power consumption) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The filling rate of ball mill, the wind speed in ball mill, the rotation speed of powder separator, and the wind speed of exhaust blower in the knowledge record are used as recommended data and support for settings of air conditioning.

In step S60, the recommended suggestions can be offered to workers for operation, or can be directly controlled by a central control system.

In S70, the process goes to step S30.

Example 67

Control for tobacco preparation and blending

The shredded tobacco produced by the main production line, the shredded tobacco produced by the small production line, and the shredded tobacco produced by the stem production line are accurately and uniformly blended according to the design requirements of the product formula. However, due to the phenomenon that the production of the small production line and the stem production line is not synchronized with the production of the large production line, the products produced by the small production line and the stem production line are first put into a module cabinet until the drying process of large production line is completed before premixing and blending. In this way, the moisture of the shredded tobacco in the small production line and the stem production line will be lost, resulting in a situation that the original outlet moisture content of the dried tobacco from the production lines meets the process standard, but the moisture content after the actual blending does not meet the process standard. Therefore, the requirement for the moisture content after blending can be satisfied by controlling the set values of the moisture contents at the outlets of dryers of the small production line and the stem production line. According to the product design requirements, flavors are applied to the shredded tobacco accurately and evenly, and the various materials are further mixed thoroughly. In order to enable the shredded tobacco to fully absorb the flavors and balance the moisture content and temperature of the shredded tobacco, it is required to store the shredded tobacco after flavoring.

The process flow of this embodiment:

In step S10, three data dimensions are determined.

Basic work conditions: brand, air temperature and humidity before flavoring and after drying, temperature and humidity of module cabinet, the material flow and in-cabinet residence time of the small production line, temperature and humidity of mixing cabinet, moisture content after drying on the main production line, temperature and humidity of shredded stem cabinet, and the material flow and in-cabinet residence time of the stem production line.

Operational data: the set value of the moisture content at the outlet of the dryer of the small production line and the set value of the moisture content at the outlet of the dryer of the stem production line.

Optimization objective: to achieve precise control of the moisture content of shredded tobacco after flavoring (closer to the target center value).

Constraints: the moisture content of the shredded tobacco after flavoring meets the configuration value.

In step S20, a subdivision rule is set for each data dimension of the basic work conditions.

The isometric classification method is carried out in this example.

Upper and lower limits are set for work condition data.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (brand, air temperature and humidity before flavoring and after drying, temperature and humidity of module cabinet, the material flow and in-cabinet residence time of the small production line, temperature and humidity of mixing cabinet, moisture content after drying on the main production line, temperature and humidity of shredded stem cabinet, and the material flow and in-cabinet residence time of the stem production line), operational data (the set value of the moisture content at the outlet of the dryer of the small production line and the set value of the moisture content at the outlet of the dryer of the stem production line), and evaluation data (the moisture content of shredded tobacco after flavoring) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The set value of the moisture content at the outlet of the dryer of the small production line and the set value of the moisture content at the outlet of the dryer of the stem production line in the knowledge record are used as recommended suggestions.

In step S60, the recommended suggestions can be offered to workers for operation, or can be directly controlled by the system.

In S70, the process goes to step S30.

Example 68

Raw material batching adjustment of cement

After the raw materials such as limestone, clay and sandstone are ground according to a certain proportion, the three types of data (saturation coefficient of lime, silicic acid rate, and aluminum-oxygen rate) will be tested. According to the test results, the dosage of raw materials is adjusted to improve the quality of the next batch of raw materials.

The process flow of this embodiment:

In step S10, three data dimensions are determined.

Basic work conditions: saturation coefficient of lime, silicic acid rate, and aluminum-oxygen rate.

Operational data: limestone input flow, clay input flow, iron powder input flow, and sandstone input flow.

Optimization objective: to improve the qualification rate of raw materials.

Constraints: production process conditions.

In step S20, a subdivision rule is set for each data dimension of the basic work conditions.

Upper and lower limits are set for the work conditions.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (saturation coefficient of lime, silicic acid rate, and aluminum-oxygen rate), operational data (limestone input flow, clay input flow, iron powder input flow, and sandstone input flow) and evaluation data (the qualification rate of raw materials) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The limestone input flow, clay input flow, iron powder input flow, and sandstone input flow in the knowledge record are used as recommended data and support for settings of air conditioning.

In step S60, the recommended suggestions can be offered to workers for operation, or can be directly controlled by a central control system.

In S70, the process goes to step S30.

Example 69

Raw meal homogenization operation

In order to ensure the high uniformity of the components of the raw material entering the kiln, it is required to homogenize the raw material. This requires strict control of the environment (flow valve, discharge time, and inflation time) of the homogenization silo, and relatively high power consumption is generated by devices during the control process.

The process flow of this embodiment:

In step S10, three data dimensions are determined.

Basic work conditions: feed moisture, rotation speed of the inflation box in an inner silo, and weight of raw material in a homogenizing silo.

Operational data: opening of flow valve in sector area; hoist current; discharge time; and opening of flow valve on conveying side at the bottom of the silo.

Optimization objective: to achieve the lowest unit power consumption of the homogenizing silo.

Constraints: inflation pressure in the silo.

In step S20, a subdivision rule is set for each data dimension of the basic work conditions.

The isometric classification method is carried out in this example to set the upper and lower limits of the work conditions.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (feed moisture, rotation speed of the inflation box in an inner silo, and weight of raw material in a homogenizing silo), operational data (opening of flow valve in sector area; hoist current; discharge time; and opening of flow valve on conveying side at the bottom of the silo) and evaluation data (unit power consumption) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The opening of flow valve in sector area, the hoist current, the discharge time, and the opening of flow valve on conveying side at the bottom of the silo in the knowledge record are used as recommended data and support for settings of air conditioning.

In step S60, the recommended suggestions can be offered to workers for operation, or can be directly controlled by a central control system.

In S70, the process goes to step S30.

Example 70

Preheating and decomposition operation of preheater

Sufficient gas-to-material heat exchange in the preheater can effectively improve thermal efficiency and reduce energy consumption. The wind speed and temperature of the system in the preheater will directly affect the preheating result of the cement raw meal.

The process flow of this embodiment:

In step S10, three data dimensions are determined.

Basic work conditions: feeding flow of raw material, outlet temperature of C1/C2/C3/C4/C5 preheater, negative pressure at the outlet of C1/C2/C3/C4/C5 preheater, inlet flue gas speed of C5, inlet flue gas temperature of C5, and temperature of kiln-tail smoke chamber.

Operational data: air-lock valve opening of C1/C2/C3/C4/C5 preheater, tertiary air valve opening, and kiln tail coal feed.

Optimization objective: to ensure that the outlet temperature of the preheater is close to the target value as much as possible.

Constraints: outlet temperature of preheater, negative pressure value at the cone on C5.

In step S20, a subdivision rule is set for each data dimension of the basic work conditions.

The isometric classification method is carried out in this example to set the upper and lower limits of the work conditions.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (feeding flow of raw material, outlet temperature of C1/C2/C3/C4/C5 preheater, negative pressure at the outlet of C1/C2/C3/C4/C5 preheater, inlet flue gas speed of C5, inlet flue gas temperature of C5, and temperature of kiln-tail smoke chamber), operational data (air-lock valve opening of C1/C2/C3/C4/C5 preheater, tertiary air valve opening, and kiln tail coal feed) and evaluation data (outlet temperature of preheater) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The air-lock valve opening of C1/C2/C3/C4/C5 preheater, tertiary air valve opening, and kiln tail coal feed in the knowledge record are used as recommended data and support for settings of air conditioning.

In step S60, the recommended suggestions can be offered to workers for operation, or can be directly controlled by a central control system.

In S70, the process goes to step S30.

Example 71

Rotary kiln operation

After being pre-decomposed and preheated in the cyclone preheater, all the raw materials are combusted in the rotary kiln to form clinker. A very high temperature is required during the process of combusting the raw materials to obtain clinker, which consumes more coal fed and lots of heat energy. If the air, coal, material and kiln speed are reasonably controlled, the unit energy consumption of the rotary kiln can be saved.

The process flow of this embodiment:

In step S10, three data dimensions are determined.

Basic work conditions: raw meal dosage, outlet temperature of decomposing furnace, temperature of the combustion zone, the temperature of the kiln-tail smoke chamber, and the decomposition rate of the raw material entering the kiln.

Operational data: rotation speed of the kiln, instantaneous coal feed at the kiln head, the rotation speed of exhaust blower, high-temperature blower speed, tertiary air valve opening, and negative pressure of kiln-head hood.

Optimization objective: to reduce the unit coal consumption of rotary kiln.

Constraints: rotation speed of the kiln, rotary kiln temperature, kiln continuous operation time of the kiln, and coal feeding ratio of kiln head and kiln tail.

In step S20, a subdivision rule is set for each data dimension of the basic work conditions.

The isometric classification method is carried out in this example to set the upper and lower limits of the work conditions.

In step S30, the basic work condition data and the operational data are monitored in a real-time and online manner, and an operation record collection plan, including collection time, is formulated once a change is found.

In step S40, operation record collection is carried out.

If there is currently an operation record collection plan and the collection time is up, the constraints are checked. If all the constraints are met, the basic work condition data (raw meal dosage, outlet temperature of decomposing furnace, temperature of the combustion zone, the temperature of the kiln-tail smoke chamber, and the decomposition rate of the raw material entering the kiln), operational data (rotation speed of the kiln, instantaneous coal feed at the kiln head, the rotation speed of exhaust blower, high-temperature blower speed, tertiary air valve opening, and negative pressure of kiln-head hood) and evaluation data (unit coal consumption) are added to the knowledge base as a complete knowledge record.

In step S50, intelligent decision-making is performed.

The current basic work conditions are obtained and the knowledge base is searched for the corresponding subdivided work conditions. For knowledge records that meet the constraints, records corresponding to the optimal evaluation data are selected as the basis for generating operation suggestions. The rotation speed of the kiln, the instantaneous coal feed at the kiln head, the rotation speed of exhaust blower, the high-temperature blower speed, the tertiary air valve opening, and the negative pressure of kiln-head hood in the knowledge record are used as recommended data and support for settings of air conditioning.

In step S60, the recommended suggestions can be offered to workers for operation, or can be directly controlled by a central control system.

In S70, the process goes to step S30.

It can be seen from the above description of the present invention that, compared with the prior art, an operation behavior record management method of the present invention has the following advantages.

1. The production, manipulation, operation, and maintenance problems in the production field and service field are boiled down to three types of data and the relationship between the basic work condition data, operational data, and evaluation data, and the problem in difference between production, control, operation, operation and maintenance inks in the production field and service field is solved.

2. In the production, control, operation links in the industrial field or in the operation and maintenance links in the service field, online knowledge accumulation of three types of data is achieved. By combining historical optimization methods and technologies with real-time online learning methods and technologies, online knowledge accumulation of three types of data is achieved, and the problem of operating experience accumulation in the actual production process is solved.

The present invention is exemplarily described above in conjunction with the embodiments. Obviously, the specific implementation of the present invention is not limited by the above-mentioned embodiments, as long as various non-substantial improvements made according to the method concept and technical solutions of the present invention are adopted, or the concept and technical solutions of the present invention are directly applied to other occasions without improvement, they all fall within the scope of the present invention.

**Claims**

1. An operation behavior record management method, comprising:

   determining basic work condition data, operational data, evaluation data and constraints thereamong, wherein the basic work condition data, the operational data and the evaluation data all have at least one dimension;
   setting a subdivision rule for each dimension of the basic work conditions, and classifying the basic work conditions into at least one subdivided work condition through the subdivision rule, each subdivided work condition corresponding to an operation behavior record set;
   formulating an operation behavior recording rule, and obtaining real-time and/or historical basic work condition data, operational data and evaluation data;
   entering an operation behavior recording process and checking the constraints; if all the constraints are met, adding the subdivided work conditions, the operational data and the evaluation data to the corresponding operation behavior record set as a complete operation behavior record; and
   obtaining current basic work condition data, searching for the corresponding subdivided work condition and its operation behavior record set, and selecting operational data corresponding to optimal evaluation data from operation behavior records that meet the constraints to form operation suggestions.

2. The operation behavior record management method according to claim 1, wherein after the operation suggestions are applied to actual productions and when the operational data and the evaluation data change, a new round of operation behavior recording process is entered.

3. The operation behavior record management method according to claim 1, wherein the constraints include preconditions for optimization objectives, negative lists for the operational data, and compliance constraints for the evaluation data;

the precondition for the optimization objectives refers to reaching the optimization objectives when the preconditions are met;
the negative lists for the operational data refer to dangerous operation behaviors that should be prohibited for reasons of equipment safety and personnel safety;
the compliance constraints refer to situations, in the evaluation of various results caused by basic operating condition data and operational data, that violate national standards, affect product quality compliance, and have adverse effects on subsequent processes.

4. The operation behavior record management method according to claim 1, wherein the operation behavior record set only retains a group of operation behavior records corresponding to optimal evaluation data or top N operation behavior records.

5. An operation behavior record management system, adopting the operation behavior record management method according to any of claims 1 to 4 and comprising a basic work condition data collecting module, an operational data collecting module, an evaluation data collecting module, and a data analysis module, wherein

the basic work condition data collecting module is configured to collect information of basic work conditions and transmit the information to the data analysis module;
the operational data collecting module is configured to collect operational data and transmit the operational data to the data analysis module;
the evaluation data collecting module is configured to collect or calculate evaluation data, and transmit the evaluation data to the data analysis module;
the data analysis module is pre-stored with: constraints among the basic operating condition data, the operational data, and the evaluation data; and an operation behavior recording rule;
the data analysis module is configured to check constraints among real-time and/or historical basic work condition data, operational data and evaluation data; and to add subdivided work conditions, operational data and evaluation data to a corresponding operation behavior record set as a complete operation behavior record if all the constraints are met;
the data analysis module obtains current basic work condition data, searches for a corresponding subdivided work condition and its operation behavior record set, and selects operational data corresponding to optimal evaluation data from operation behavior records that meet the constraints to form operation suggestions.

6. An operation behavior record management device, adopting the operation behavior record management method according to any of claims 1 to 4 and comprising a basic work condition data collecting unit, an operational data collecting unit, an evaluation data acquisition device, and a data analysis unit, wherein

the basic work condition data collecting unit is configured to collect the information of the basic work conditions and transmits the information to the data analysis unit;
the operational data collecting unit is configured to collect operational data and transmit the operational data to the data analysis unit;
the evaluation data collecting unit is configured to collect or calculate evaluation data and transmitting the evaluation data to the data analysis unit;
the data analysis module is pre-stored with: constraints among the basic operating condition data, the operational data, and the evaluation data; and an operation behavior recording rule;
the data analysis unit is configured to check constraints among real-time and/or historical basic work condition data, operational data and evaluation data; and to add subdivided work conditions, operational data and evaluation data to a corresponding operation behavior record set as a complete operation behavior record if all the constraints are met;

the data analysis unit obtains current basic work condition data, searches for a corresponding subdivided work condition and its operation behavior record set, and selects operational data corresponding to optimal evaluation data from operation behavior records that meet the constraints to form operation suggestions.

### INTERNATIONAL SEARCH REPORT

| International application No. |
| --- |
| **PCT/CN2020/078005** |

**A.   CLASSIFICATION OF SUBJECT MATTER**

G06Q 10/06(2012.01)i

According to International Patent Classification (IPC) or to both national classification and IPC

**B.    FIELDS SEARCHED**

Minimum documentation searched (classification system followed by classification symbols)

G06Q; G05B

Documentation searched other than minimum documentation to the extent that such documents are included in the fields searched

Electronic data base consulted during the international search (name of data base and, where practicable, search terms used)

VEN; CNABS; CNTXT: 操作, 数据分析, 工况, 记录, 优化, 管理, 规则, 评价, 采集, 经验, 数据库, 更新, work, evaluate, condition, optimization, evaluation, optimize, record, management, analysis, rule, regulation, operation, dadabase, experience, update, refresh, collect, gather

**C.    DOCUMENTS CONSIDERED TO BE RELEVANT**

| Category* | Citation of document, with indication, where appropriate, of the relevant passages | Relevant to claim No. |
| --- | --- | --- |
| X | CN 108614526 A (SHENYANG INSTITUTE OF AUTOMATION, CHINESE ACADEMY OF SCIENCES) 02 October 2018 (2018-10-02)<br>  description, paragraphs [0031]-[0098] and figures 1-7 | 1-6 |
| A | CN 103412821 A (SHANGHAI AEROSPACE POWER TECHNOLOGY CO., LTD.) 27 November 2013 (2013-11-27)<br>  entire document | 1-6 |
| A | CN 102419830 A (ZHOU, Xiaodan) 18 April 2012 (2012-04-18)<br>  entire document | 1-6 |
| A | CN 104331770 A (YE, Xiaoran) 04 February 2015 (2015-02-04)<br>  entire document | 1-6 |
| A | CN 103941652 A (ZHEJIANG ANKE NETWORK TECHNOLOGY CO., LTD.) 23 July 2014 (2014-07-23)<br>  entire document | 1-6 |
| A | JP 2019144609 A (WINWORKS KK) 29 August 2019 (2019-08-29)<br>  entire document | 1-6 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 October 2020** | **05 November 2020** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/078005** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2010128520 A2 (ECOAXIS SYSTEMS PVT LTD et al.) 11 November 2010 (2010-11-11)<br>     entire document | 1-6 |
| A | US 2002174134 A1 (GOYKHMAN G) 21 November 2002 (2002-11-21)<br>     entire document | 1-6 |

Form PCT/ISA/210 (second sheet) (January 2015)

**INTERNATIONAL SEARCH REPORT**
Information on patent family members

International application No.

**PCT/CN2020/078005**

| Patent document cited in search report | | | Publication date (day/month/year) | Patent family member(s) | | | Publication date (day/month/year) |
|---|---|---|---|---|---|---|---|
| CN | 108614526 | A | 02 October 2018 | CN | 108614526 | B | 24 January 2020 |
| CN | 103412821 | A | 27 November 2013 | CN | 103412821 | B | 27 January 2016 |
| CN | 102419830 | A | 18 April 2012 | | None | | |
| CN | 104331770 | A | 04 February 2015 | | None | | |
| CN | 103941652 | A | 23 July 2014 | | None | | |
| JP | 2019144609 | A | 29 August 2019 | | None | | |
| WO | 2010128520 | A2 | 11 November 2010 | WO | 2010128520 | A3 | 13 January 2011 |
| | | | | DE | 112010001881 | T5 | 03 January 2013 |
| | | | | US | 2012053979 | A1 | 01 March 2012 |
| US | 2002174134 | A1 | 21 November 2002 | | None | | |

Form PCT/ISA/210 (patent family annex) (January 2015)